(19) Europäisches Patentamt / European Patent Office / Office européen des brevets

(11) **EP 4 280 761 A1**

(12) **EUROPEAN PATENT APPLICATION**
published in accordance with Art. 153(4) EPC

(43) Date of publication:
**22.11.2023 Bulletin 2023/47**

(21) Application number: **22739836.9**

(22) Date of filing: **18.01.2022**

(51) International Patent Classification (IPC):
**H04W 72/04** (2023.01)     **H04L 5/00** (2006.01)

(52) Cooperative Patent Classification (CPC):
**H04L 5/00; H04W 72/04**

(86) International application number:
**PCT/KR2022/000930**

(87) International publication number:
**WO 2022/154644 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.01.2021 US 202163138533 P**

(71) Applicant: **LG Electronics Inc.**
**Yeongdeungpo-gu**
**Seoul 07336 (KR)**

(72) Inventors:
• **LEE, Jeongsu**
 **Seoul 06772 (KR)**
• **CHA, Hyunsu**
 **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR TRANSMITTING/RECEIVING SIGNALS IN WIRELESS COMMUNICATION SYSTEM AND APPARATUS FOR SUPPORTING SAME**

(57) Various embodiments relate to a next-generation wireless communication system for supporting a data transmission rate and the like higher than that of a 4th generation (4G) wireless communication system. According to various embodiments, a method for transmitting/receiving signals in a wireless communication system and an apparatus for supporting same can be provided, and various other embodiments can be provided.

FIG. 22

EP 4 280 761 A1

## Description

### TECHNICAL FIELD

Various embodiments are directed to a wireless communication system.

### BACKGROUND

As more and more communication devices require greater communication capacity, a need for improved mobile broadband communication compared to the existing radio access technology (RAT) has emerged. In addition, massive MTC (Machine Type Communications), which provides various services anytime and anywhere by connecting multiple devices and objects, is also being considered in next-generation communication. In addition, communication system design considering service/LTE sensitive to reliability and latency is being considered.

### DISCLOSURE

### TECHNICAL PROBLEM

Various embodiments may provide a method of transmitting and receiving a signal in a wireless communication system and a device for supporting the same.
Various embodiments may provide a positioning method and a device for supporting the same.
It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

Various embodiments may provide a method of transmitting and receiving a signal in a wireless communication system and a device for supporting the same.
According to various embodiments, a method performed by a user equipment (UE) in a wireless communication system may be provided.
According to various embodiments, the method may include receiving configuration information on a sounding reference signal (SRS), and transmitting the SRS based on the configuration information.
According to various embodiments, the configuration information may include (i) first information on a number of consecutive orthogonal frequency division multiplexing (OFDM) symbols included in an SRS resource in which the SRS is transmitted and (ii) second information on a comb size of the SRS resource.
According to various embodiments, a length of an SRS sequence for the SRS may be determined based on the first information and the second information.
According to various embodiments, the length of the SRS sequence may be determined based on comparison between the number of the OFDM symbols and the comb size.
According to various embodiments, based on that the number of the OFDM symbols is equal to or greater than the comb size, the length of the SRS sequence may be determined to satisfy a product of a parameter determined based on a bandwidth part (BWP) in which the SRS is transmitted and a number of subcarriers per resource block (RB).
According to various embodiments, based on that the number of the OFDM symbols is less than the comb size, the length of the SRS sequence may be determined to satisfy a product of the parameter determined based on the BWP in which the SRS is transmitted, the number of subcarriers per RB, a reciprocal of the comb size, and the number of the OFDM symbols.
According to various embodiments, the SRS resource may include a plurality of resource elements (REs).
According to various embodiments, the SRS sequence may be mapped to the plurality of REs based on that mapping is performed from an RE having a lowest RE index among the plurality of REs to an RE having a highest RE index among the plurality of REs.
According to various embodiments, in mapping of the SRS sequence to the plurality of REs, based on that the number of the OFDM symbols is equal to or greater than the comb size, the number of SRS sequences may be determined to satisfy a product of the length of the SRS sequence and a reciprocal of the comb size, and based on the number of the OFDM symbols is less than the comb size, the number of the SRS sequences may be determined to satisfy a product of the length of the SRS sequence and the number of the OFDM symbols.
According to various embodiments, based on that the SRS is an SRS for positioning, the length of the SRS sequence may be determined based on the first information and the second information.

According to various embodiments, a user equipment (UE) operating in a wireless communication system may be provided.

According to various embodiments, the UE may include a transceiver; and one or more processors connected to the transceiver.

According to various embodiments, the one or more processors may be configured to receive configuration information on a sounding reference signal (SRS), and transmit the SRS based on the configuration information.

According to various embodiments, the configuration information may include (i) first information on a number of consecutive orthogonal frequency division multiplexing (OFDM) symbols included in an SRS resource in which the SRS is transmitted and (ii) second information on a comb size of the SRS resource.

According to various embodiments, a length of an SRS sequence for the SRS may be determined based on the first information and the second information.

According to various embodiments, the length of the SRS sequence may be determined based on comparison between the number of the OFDM symbols and the comb size.

According to various embodiments, based on that the number of the OFDM symbols is equal to or greater than the comb size, the length of the SRS sequence may be determined to satisfy a product of a parameter determined based on a bandwidth part (BWP) in which the SRS is transmitted and a number of subcarriers per resource block (RB).

According to various embodiments, based on that the number of the OFDM symbols is less than the comb size, the length of the SRS sequence may be determined to satisfy a product of the parameter determined based on the BWP in which the SRS is transmitted, the number of subcarriers per RB, a reciprocal of the comb size, and the number of the OFDM symbols.

According to various embodiments, the SRS resource may include a plurality of resource elements (REs).

According to various embodiments, the SRS sequence may be mapped to the plurality of REs based on that mapping is performed from an RE having a lowest RE index among the plurality of REs to an RE having a highest RE index among the plurality of REs.

According to various embodiments, in mapping of the SRS sequence to the plurality of REs, based on that the number of the OFDM symbols is equal to or greater than the comb size, the number of SRS sequences may be determined to satisfy a product of the length of the SRS sequence and a reciprocal of the comb size, and based on the number of the OFDM symbols is less than the comb size, the number of the SRS sequences is determined to satisfy a product of the length of the SRS sequence and the number of the OFDM symbols.

According to various embodiments, based on that the SRS is an SRS for positioning, the length of the SRS sequence may be determined based on the first information and the second information.

According to various embodiments, the one or more processors may be configured to communicate with one or more of a mobile terminal, a network, and an autonomous vehicle other than a vehicle including the UE.

According to various embodiments, a method performed by a base station (BS) in a wireless communication system may be provided.

According to various embodiments, the method may include transmitting configuration information on a sounding reference signal (SRS), and receiving the SRS in response to the configuration information.

According to various embodiments, the configuration information may include (i) first information on a number of consecutive orthogonal frequency division multiplexing (OFDM) symbols included in an SRS resource in which the SRS is received and (ii) second information on a comb size of the SRS resource.

According to various embodiments, a length of an SRS sequence for the SRS may be determined based on the first information and the second information.

According to various embodiments, a base station (BS) operating in a wireless communication system may be provided.

According to various embodiments, the BS may include a transceiver, and one or more processors connected to the transceiver.

According to various embodiments, the one or more processors may be configured to transmit configuration information on a sounding reference signal (SRS), and receive the SRS in response to the configuration information.

According to various embodiments, the configuration information may include (i) first information on a number of consecutive orthogonal frequency division multiplexing (OFDM) symbols included in an SRS resource in which the SRS is received and (ii) second information on a comb size of the SRS resource.

According to various embodiments, a length of an SRS sequence for the SRS may be determined based on the first information and the second information.

According to various embodiments, a device operating in a wireless communication system may be provided.

According to various embodiments, the device may include one or more processors, and one or more memories operatively connected to the one or more processors and configured to store one or more instructions that cause the one or more processors to perform an operation based on the operation being executed.

According to various embodiments, the operation may include receiving configuration information on a sounding reference signal (SRS), and transmitting the SRS based on the configuration information.

According to various embodiments, the configuration information may include (i) first information on a number of consecutive orthogonal frequency division multiplexing (OFDM) symbols included in an SRS resource in which the SRS is transmitted and (ii) second information on a comb size of the SRS resource.

According to various embodiments, a length of an SRS sequence for the SRS may be determined based on the first information and the second information.

According to various embodiments, a non-transitory processor-readable medium for storing one or more instructions that cause one or more processors to perform an operation may be provided.

According to various embodiments, the operation may include receiving configuration information on a sounding reference signal (SRS), and transmitting the SRS based on the configuration information.

According to various embodiments, the configuration information may include (i) first information on a number of consecutive orthogonal frequency division multiplexing (OFDM) symbols included in an SRS resource in which the SRS is transmitted and (ii) second information on a comb size of the SRS resource.

According to various embodiments, a length of an SRS sequence for the SRS may be determined based on the first information and the second information.

The various embodiments described above are only some of the various embodiments. Various embodiments in which technical features of various embodiments are reflected may be derived and understood by those skilled in the art based on the detailed description to be described below.

## ADVANTAGEOUS EFFECTS

According to various embodiments, a signal in a wireless communication system may be effectively transmitted and received.

According to various embodiments, positioning in a wireless communication system may be effectively performed.

According to various embodiments, a method of generating a sequence suitable for a sounding reference signal (SRS) having a staggered pattern and a resource mapping method with the sequence.

According to various embodiments, SRS reception performance at a receiving end may be improved.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings are provided to help understanding of various embodiments, along with a detailed description. However, the technical features of various embodiments are not limited to a specific drawing, and features disclosed in each drawing may be combined with each other to constitute a new embodiment. Reference numerals in each drawing denote structural elements.

FIG. 1 is a diagram illustrating physical channels and a signal transmission method using the physical channels, which may be used in various embodiments.

FIG. 2 is a diagram illustrating a radio frame structure in a new radio access technology (NR) system to which various embodiments are applicable.

FIG. 3 illustrates an exemplary resource grid to which various embodiments are applicable.

FIG. 4 is a diagram illustrating mapping of physical channels in a slot, to which various embodiments are applicable.

FIG. 5 is a diagram illustrating a positioning protocol configuration for positioning a user equipment (UE), to which various embodiments are applicable.

FIG. 6 illustrates an exemplary system architecture for measuring positioning of a UE to which various embodiments are applicable.

FIG. 7 illustrates an implementation example of a network for UE positioning.

FIG. 8 is a diagram illustrating protocol layers for supporting LTE positioning protocol (LPP) message transmission, to which various embodiments are applicable.

FIG. 9 is a diagram illustrating protocol layers for supporting NR positioning protocol a (NRPPa) protocol data unit (PDU) transmission, to which various embodiments are applicable.

FIG. 10 is a diagram illustrating an observed time difference of arrival (OTDOA) positioning method, to which various embodiments are applicable.

FIG. 11 is a diagram illustrating a multi-round trip time (multi-RTT) positioning method to which various embodiments are applicable.

FIG. 12 is a simplified diagram illustrating a method of operating a UE, a transmission and reception point (TRP), a location server, and/or a location management function (LMF) according to various embodiments.

FIG. 13 is a simplified diagram illustrating a method of operating a UE, a transmission and reception point (TRP), a location server, and/or a location management function (LMF) according to various embodiments.

FIG. 14 is a diagram illustrating an example of a sounding reference signal (SRS) resource pattern to which various embodiments are applicable.

FIG. 15 is a diagram illustrating an example of an SRS resource mapping method according to various embodiments.

FIG. 16 is a diagram illustrating an example of an SRS resource mapping method according to various embodiments.

FIG. 17 is a diagram illustrating an example of an SRS resource mapping method according to various embodiments.

FIG. 18 is a diagram illustrating an example of an SRS resource pattern to which various embodiments are applicable.

FIG. 19 is a diagram illustrating an example of an SRS resource according to various embodiments.

FIG. 20 is a diagram illustrating an example of an SRS resource according to various embodiments. FIG. 20 shows a case in which a comb size and a symbol length are each 4.

FIG. 21 is a diagram showing comparison of cross-correlation performance between a sequence generation and resource mapping method according to various embodiments and a sequence generation and resource mapping method according to a conventional method.

FIG. 22 is a diagram simply illustrating an operating method of a UE and network nodes according to various embodiments.

FIG. 23 is a flowchart illustrating an operating method of a UE according to various embodiments.

FIG. 24 is a flowchart illustrating a method of operating a network node according to various embodiments.

FIG. 25 is a block diagram illustrating an apparatus for implementing various embodiments.

FIG. 26 illustrates an exemplary communication system to which various embodiments are applied.

FIG. 27 illustrates exemplary wireless devices to which various embodiments are applicable.

FIG. 28 illustrates other exemplary wireless devices to which various embodiments are applied.

FIG. 29 illustrates an exemplary portable device to which various embodiments are applied.

FIG. 30 illustrates an exemplary vehicle or autonomous driving vehicle to which various embodiments.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

Various embodiments are described in the context of a 3GPP communication system (e.g., including LTE, NR, 6G, and next-generation wireless communication systems) for clarity of description, to which the technical spirit of the various embodiments is not limited. For the background art, terms, and abbreviations used in the description of the various embodiments, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

1. 3GPP System

1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

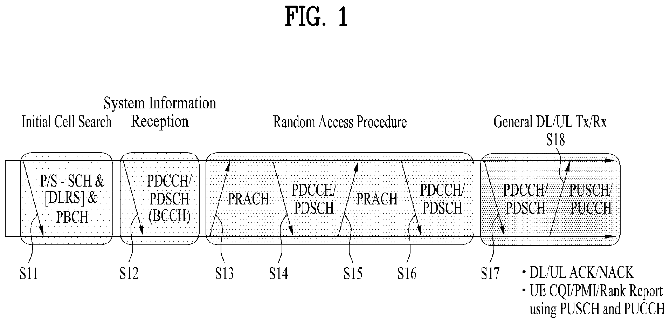

FIG. 1 is a diagram illustrating physical channels and a signal transmission method using the physical channels, which may be used in various embodiments.

When powered on or when a UE initially enters a cell, the UE performs initial cell search involving synchronization with a BS in step S11, For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

1.2. Physical Resource

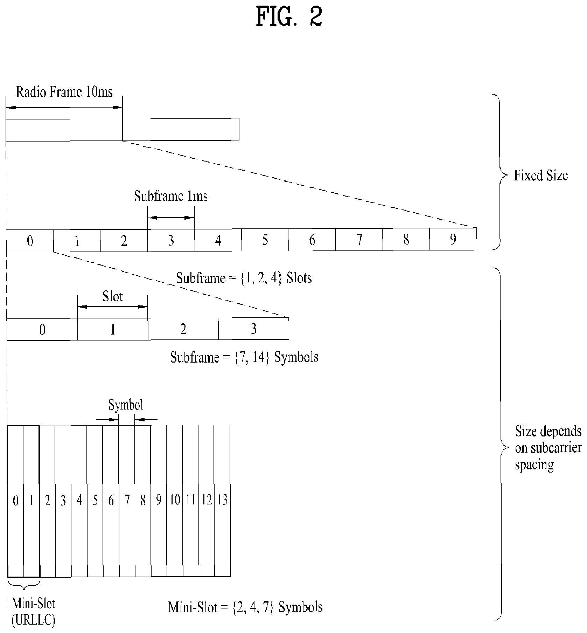

FIG. 2 is a diagram illustrating a radio frame structure in an NR system to which various embodiments are applicable.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part (BWP), $\mu$ and a CP are obtained from RRC parameters provided by the BS.

[Table 1]

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15kHz, a dense-urban area, a lower latency, and a wider carrier bandwidth are supported for an SCS of 30kHz/60kHz, and a larger bandwidth than 24.25GHz is supported for an SCS of 60kHz or more, to overcome phase noise.

An NR frequency band is defined by two types of frequency ranges, FR1 and FR2. FR1 may be a sub-6GHz range, and FR2 may be an above-6GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz - 7125 MHz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, $T_c = 1/(\triangle f_{max}*N_f)$ where $\triangle f_{max} = 480* 10^3$ Hz and a value $N_f$ related to a fast Fourier transform (FFT) size or an inverse fast Fourier transform (IFFT) size is given as $N_f = 4096$. $T_c$ and $T_s$ which is an LTE-based time unit and sampling time, given as $T_s = 1/((15kHz)*2048)$ are placed in the following relationship: $T_s/T_c = 64$. DL and UL transmissions are organized into (radio) frames each having a duration of $T_f = (\triangle f_{max}*N_f/100)*T_c = 10$ms. Each radio frame includes 10 subframes each having a duration of $T_{sf} = (\triangle f_{max}*N_f/1000)*T_c = 1$ms. There may exist one set of frames for UL and one set of frames for DL. For a numerology $\mu$, slots are numbered with $n^\mu_s \in \{0,...,N^{slot,\mu}_{subframe}-1\}$ in an increasing order in a subframe, and with $n^\mu_{s,f} \in \{0,...,N^{slot,\mu}_{frame}-1\}$ in an increasing order in a radio frame. One slot includes $N^\mu_{symb}$ consecutive OFDM symbols, and $N^\mu_{symb}$ depends on a CP. The start of a slot $n^\mu_s$ in a subframe is aligned in time with the start of an OFDM symbol $n^\mu_s*N^\mu_{symb}$ in the same subframe.

Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| /I | $N^{slot}_{symb}$ | $N^{frame,\mu}_{slot}$ | $N^{subframe,\mu}_{slot}$ |
|---|---|---|---|
| 2 | 12 | 40 | 4 |

In the above tables, $N^{slot}_{symb}$ represents the number of symbols in a slot, $N^{frame,\mu}_{slot}$ represents the number of slots in a frame, and $N^{subframe,\mu}_{slot}$ represents the number of slots in a subframe.

In the NR system to which various embodiments are applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.

FIG. 2 illustrates an example with $\mu$=2 (i.e., an SCS of 60kHz), in which referring to Table 6, one subframe may include four slots. One subframe = {1, 2, 4} slots in FIG. 2, which is exemplary, and the number of slot(s) which may be included in one subframe is defined as listed in Table 3 or Table 4.

Further, a mini-slot may include 2, 4 or 7 symbols, fewer symbols than 2, or more symbols than 7.

Regarding physical resources in the NR system, antenna ports, a resource grid, resource elements (REs), resource blocks (RBs), carrier parts, and so one may be considered. The physical resources in the NR system will be described below in detail.

An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi co-located or quasi co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

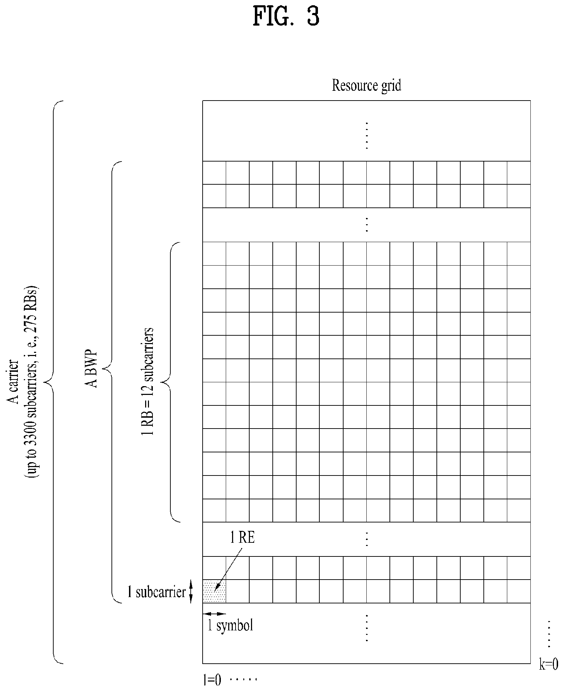

FIG. 3 illustrates an exemplary resource grid to which various embodiments are applicable.

Referring to FIG. 3, for each subcarrier spacing (SCS) and carrier, a resource grid is defined as $14 \times 2^\mu$ OFDM symbols by $N_{\text{grid}}^{\text{size},\mu} \times N_{\text{SC}}^{\text{RB}}$ subcarriers, where $N_{\text{grid}}^{\text{size},\mu}$ is indicated by RRC signaling from the BS. $N_{\text{grid}}^{\text{size},\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, l) where k represents an index in the frequency domain, and l represents a symbol position in the frequency domain relative to a reference point. The RE (k, l) for the SCS configuration $\mu$ and the antenna port p corresponds to a physical resource and a complex value $a_{k,l}^{(p,\mu)}$. An RB is defined as $N_{\text{SC}}^{\text{RB}} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

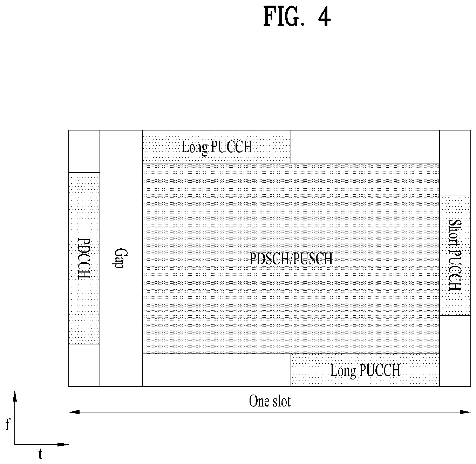

FIG. 4 is a diagram illustrating exemplary mapping of physical channels in a slot, to which various embodiments are applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. APDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates.

A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or noncodebook-based manner.

The PUCCH delivers UCI, an HARQ-ACK, and/or an SR and is classified as a short PUCCH or a long PUCCH according to the transmission duration of the PUCCH.

## Bandwidth part, BWP

In the NR system, up to 400MHz per carrier may be supported. When a UE operating in such a wideband carrier always operates with a radio frequency (RF) module for the entire carrier turned on, battery consumption of the UE may increase.

Alternatively, considering various use cases (e.g., eMBB, URLLC, mMTC, and so on) operating within a single wideband carrier, a different numerology (e.g., SCS) may be supported for each frequency band within the carrier.

Alternatively, each UE may have a different maximum bandwidth capability.

In this regard, the BS may indicate to the UE to operate only in a partial bandwidth instead of the total bandwidth of the wideband carrier. The partial bandwidth may be defined as a BWP.

A BWP is a subset of contiguous common RBs defined for numerology ui in BWP i on the carrier, and one numerology (e.g., SCS, CP length, or slot or mini-slot duration) may be configured for the BWP.

The BS may configure one or more BWPs in one carrier configured for the UE. Alternatively, when UEs are concentrated on a specific BWP, the BS may configure another BWP for some of the UEs, for load balancing. Alternatively, the BS may exclude some spectrum of the total bandwidth and configure both-side BWPs of the cell in the same slot in consideration of frequency-domain inter-cell interference cancellation between neighboring cells.

That is, the BS may configure at least one DL/LTL BWP for a UE associated with the wideband carrier, activate at least one of DL/UL BWP(s) configured at a specific time point (by L1 signaling being a physical-layer control signal, a MAC control element (CE) being a MAC-layer control signal, or RRC signaling), or set a timer value and switch the UE to a predetermined DL/LTL BWP, upon expiration of the timer. To indicate switching to another configured DL/LTL BWP, DCI format 1_1 or DCI format 0_1 may be used. The activated DL/LTL BWP may be referred to as an active DL/LTL BWP. During initial access or before an RRC connection setup, the UE may not receive a configuration for a DL/UL BWP from the BS. A DL/LTL BWP that the UE assumes in this situation is defined as an initial active DL/LTL BWP.

More specifically, according to various embodiments of the present disclosure, the UE may perform the following BWP operation.

AUE, which has been configured to operate BWPs of a serving cell, is configured with up to four DL BWPs within the DL bandwidth of the serving cell by a higher-layer parameter (e.g., *DL-BWP* or *BWP-Downlink*) and up to four UL BWPs within the UL bandwidth of the serving cell by a higher-layer parameter (e.g., *UL-BWP* or *BWP-Uplink*).

When the UE fails to receive a higher-layer parameter *initialDownlinkBWP,* an initial active DL BWP may be defined by the positions and number of consecutive PRBs: consecutive PRBs from the lowest index to the highest index among PRBs included in a CORESET for a Type-0 PDCCH CSS set. Further, the initial active DL BWP is defined by an SCS and a CP for PDCCH reception in the CORESET for the Type-0 PDCCH CSS set. Alternatively, the initial active DL BWP is provided by the higher-layer parameter *initialDownlinkBWP.* For an operation in a primary cell or a secondary cell, an initial active UL BWP is indicated to the UE by a higher-layer parameter *initialUplinkBWP.* When a supplementary UL carrier is configured for the UE, an initial active UL BWP on the supplementary UL carrier may be indicated to the UE by *initialUplinkBW* in a higher-layer parameter *supplementaryUplink.*

When the UE has a dedicated BWP configuration, the UE may be provided with a first active DL BWP for reception by a higher-layer parameter *firstActiveDownlinkBWP-Id* and a first active UL BWP for transmission on the carrier of the primary cell by a higher-layer parameter *firstActive UplinkGB WP-Id.*

For each DL BWP of a DL BWP set or each UL BWP of a UL BWP set, the UE may be provided with the following parameters.

- An SCS provided based on a higher-layer parameter (e.g., *subcarrierSpacing*).
- A CP provided based on a higher-layer parameter (e.g., *cyclicPrefix*).
- The number of common RBs and contiguous RBs is provided based on a higher-layer parameter *locationAndBandwidth*. The higher-layer parameter *locationAndBandwidth* indicates an offset $RB_{start}$ and a length $L_{RB}$ based on a resource indication value (RIV). It is assumed that $N^{size}_{BWP}$ is 275 and $O_{carrier}$ is provided by *offsetToCarrier* for the higher-layer parameter *subcarrierSpacing*.
- An index in the set of DL BWPs or the set of UL BWPs, provided based on a higher-layer parameter (e.g., *bwp-Id*) in UL and DL independently.
- A BWP-common set parameter or BWP-dedicated set parameter provided based on a higher-layer parameter (e.g., *bwp-Common* or *bwp-Dedicated*).

For an unpaired spectrum operation, a DL BWP in a set of DL BWPs with indexes provided by a higher-layer parameter (e.g., *bwp-Id*) is linked to a UL BWP in a set of UL BWPs with the same indexes, when the DL BWP index and the UL BWP index are identical. For the unpaired spectrum operation, when the higher-layer parameter *bwp-Id* of a DL BWP is the same as the higher-layer parameter *bwp-Id* of a UL BWP, the UE does not expect to receive a configuration in which the center frequency for the DL BWP is different from the center frequency for the UL BWP.

For each DL BWP in a set of DL BWPs of the primary cell (referred to as PCell) or of a PUCCH secondary cell (referred to as PUCCH-SCell), the UE may configure CORESETs for every CSS set and a USS. The UE does not expect to be configured without a CSS on the PCell or the PUCCH-SCell in an active DL BWP.

When the UE is provided with *controlResourceSetZero* and *searchSpaceZero* in a higher-layer parameter *PDCCH-ConfigSIB1* or a higher-layer parameter *PDCCH-ConfigCommon,* the UE determines a CORESET for a search space set based on *controlResourcesetZero* and determines corresponding PDCCH monitoring occasions. When the active DL BWP is not the initial DL BWP, the UE determines PDCCH monitoring occasions for the search space set, only if the bandwidth of the CORESET is within the active DL BWP and the active DL BWP has the same SCS configuration and CP as the initial DL BWP.

For each UL BWP in a set of UL BWPs of the PCell or the PUCCH-SCell, the UE is configured with resource sets for PUCCH transmissions.

The UE receives a PDCCH and a PDSCH in a DL BWP according to a configured SCS and CP length for the DL BWP. The UE transmits a PUCCH and a PUSCH in a UL BWP according to a configured SCS and CP length for the UL BWP.

When a bandwidth part indicator field is configured in DCI format 1_1, the value of the bandwidth part indicator field indicates an active DL BWP in the configured DL BWP set, for DL receptions. When a bandwidth part indicator field is configured in DCI format 0_1, the value of the bandwidth part indicator field indicates an active UL BWP in the configured UL BWP set, for UL transmissions.

If a bandwidth part indicator field is configured in DCI format 0_1 or DCI format 1_1 and indicates a UL or DL BWP different from the active UL BWP or DL BWP, respectively, the UE may operate as follows.

- For each information field in the received DCI format 0_1 or DCI format 1_1,

    - - if the size of the information field is smaller than a size required for interpretation of DCI format 0_1 or DCI format 1_1 for the UL BWP or DL BWP indicated by the bandwidth part indicator, the UE prepends zeros to the information field until its size is the size required for the interpretation of the information field for the UL BWP or DL BWP before the information field of DCI format 0_1 or DCI format 1_1 is interpreted.
    - - if the size of the information field is larger than the size required for interpretation of DCI format 0_1 or DCI format 1_1 for the UL BWP or DL BWP indicated by the bandwidth part indicator, the UE uses as many least significant bits (LSBs) of DCI format 0_1 or DCI format 1_1 as the size required for the UL BWP or DL BWP indicated by the bandwidth part indicator before interpreting the information field of DCI format 0_1 or DCI format 1_1.

- The UE sets the active UL BWP or DL BWP to the UL BWP or DL BWP indicated by the bandwidth part indicator in DCI format 0_1 or DCI format 1_1.

The UE does not expect to detect DCI format 1_1 or DCI format 0_1 indicating an active DL BWP or active UL BWP change with a time-domain resource assignment field providing a slot offset value smaller than a delay required for the UE for an active DL BWP change or UL BWP change.

When the UE detects DCI format 1_1 indicating an active DL BWP change for a cell, the UE is not required to receive or transmit a signal in the cell during a time period from the end of the third symbol of a slot in which the UE receives a PDCCH including DCI format 1_1 until the beginning of a slot indicated by the slot offset value of the time-domain resource assignment field in DCI format 1_1.

If the UE detects DCI format 0_1 indicating an active UL BWP change for a cell, the UE is not required to receive or transmit a signal in the cell during a time period from the end of the third symbol of a slot in which the UE receives a PDCCH including DCI format 0_1 until the beginning of a slot indicated by the slot offset value of the time-domain resource assignment field in DCI format 0_1.

The UE does not expect to detect DCI format 1_1 indicating an active DL BWP change or DCI format 0_1 indicating an active UL BWP change in a slot other than the first slot of a set of slots for the SCS of a cell that overlaps with a time period during which the UE is not required to receive or transmit a signal for an active BWP change in a different cell.

The UE expects to detect DCI format 0_1 indicating an active UL BWP change or DCI format 1_1 indicating an active DL BWP change, only if a corresponding PDCCH is received within the first 3 symbols of a slot.

For the serving cell, the UE may be provided with a higher-layer parameter *defaultDownlinkBWP-Id* indicating a default DL BWP among the configured DL BWPs. If the UE is not provided with a default DL BWP by *defaultDownlinkBWP-Id,* the default DL BWP may be set to the initial active DL BWP.

When the UE is provided with a timer value for the PCell by a higher-layer parameter *bwp-InactivityTimer* and the timer is running, the UE decrements the timer at the end of a subframe for FR1 (below 6GHz) or at the end of a half subframe for FR2 (above 6GHz), if a restarting condition is not met during a time period corresponding to the subframe for FR1 or a time periodcorresponding to the half-subframe for FR2.

For a cell in which the UE changes an active DL BWP due to expiration of a BWP inactivity timer and for accommodating a delay in the active DL BWP change or the active UL BWP change required by the UE, the UE is not required to receive or transmit a signal in the cell during a time period from the beginning of a subframe for FR1 or a half subframe for FR2, immediately after the BWP inactivity timer expires until the beginning of a slot in which the UE may receive or transmit a signal.

When the BWP inactivity timer of the UE for the specific cell expires within the time period during which the UE is not required to receive or transmit a signal for the active UL/DL BWP change in the cell or in a different cell, the UE may delay the active UL/DL BWP change triggered by expiration of the BWP activity timer until the subframe for FR1 or the half-subframe for FR2 immediately after the UE completes the active UL/DL BWP change in the cell or in the different cell.

When the UE is provided with a first active DL BWP by a higher-layer parameter *firstActiveDownlinkBWP-Id* and a first active UL BWP by a higher-layer parameter *firstActiveUplinkBWP-Id* on a carrier of the secondary cell, the UE uses the indicated DL BWP and the indicated UL BWP as the respective first active DL BWP and first active UL BWP on the carrier of the secondary cell.

For a paired spectrum operation, when the UE changes an active UL BWP on the PCell during a time period between a detection time of DCI format 1_0 or DCI format 1_1 and a transmission time of a corresponding PUCCH including HARQ-ACK information, the UE does not expect to transmit the PUCCH including the HARQ-ACK information in PUCCH resources indicated by DCI format 1_0 or DCI format 1_1.

When the UE performs radio resource management (RRM) measurement for a bandwidth outside the active DL BWP for the UE, the UE does not expect to monitor a PDCCH.

## 2. Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

## 2.1. Positioning Protocol configuration

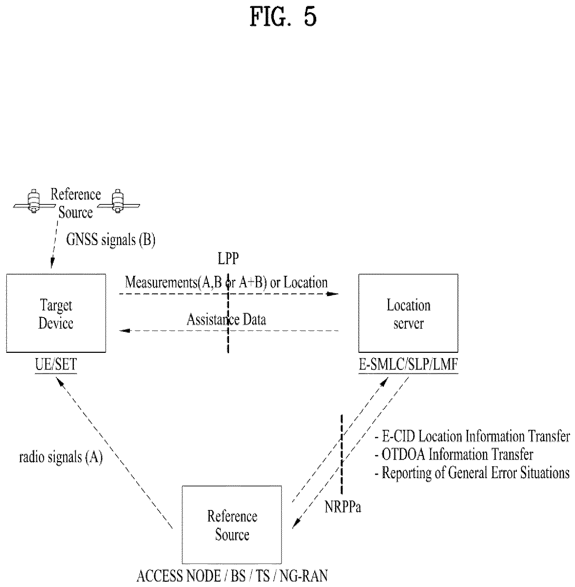

FIG. 5 is a diagram illustrating an exemplary positioning protocol configuration for positioning a UE, to which various embodiments are applicable.

Referring to FIG. 5, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

2.2. PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence *r(m)* (*m* = 0,1, ...) may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

c(i) may be a pseudo-random sequence. A pseudo-random sequence generator may be initialized by Equation 2.

[Equation 2]

$$c_{\text{init}} = \left( 2^{22} \left\lfloor \frac{n_{\text{ID,seq}}^{\text{PRS}}}{1024} \right\rfloor + 2^{10}\big(N_{\text{symb}}^{\text{slot}} n_{\text{s,f}}^{\mu} + l + 1\big)\big(2\big(n_{\text{ID,seq}}^{\text{PRS}} \bmod 1024\big) + 1\big) \right.$$

$$\left. + \big(n_{\text{ID,seq}}^{\text{PRS}} \bmod 1024\big) \right) \bmod 2^{31}$$

$n_{\text{s,f}}^{\mu}$ may be a slot number in a frame in an SCS configuration μ. ADL PRS sequence ID $n_{\text{ID,seq}}^{\text{PRS}} \in \{0,1,\dots,4095\}$ may be given by a higher-layer parameter (e.g., DL-PRS-Sequenceld). l may be an OFDM symbol in a slot to which the sequence is mapped.

Mapping to physical resources in a DL PRS resource

A PRS sequence *r(m)* may be scaled by $\beta_{\text{PRS}}$ and mapped to REs $(k, l)_{p,\mu}$, $(k, l)_{p,\mu}$ specifically by Equation 3. may represent an RE (k, l) for an antenna port p and the SCS configuration μ.

[Equation 3]

$$a_{k,l}^{(p,\mu)} = \beta_{\text{PRS}}\, r(m)$$

$$m = 0, 1, \ldots$$

$$k = mK_{\text{comb}}^{\text{PRS}} + \left(\left(k_{\text{offset}}^{\text{PRS}} + k'\right) \bmod K_{\text{comb}}^{\text{PRS}}\right)$$

$$l = l_{\text{start}}^{\text{PRS}}, l_{\text{start}}^{\text{PRS}} + 1, \ldots, l_{\text{start}}^{\text{PRS}} + L_{\text{PRS}} - 1$$

Herein, the following conditions may have to be satisfied: $(k, l)_{p,\mu}$

- The REs are included in an RB occupied by a DL PRS resource configured for the UE;
- The symbol l not used by any SS/PBCH block used by a serving cell for a DL PRS transmitted from the serving cell or indicated by a higher-layer parameter SSB-positionInBurst for a DL PRS transmitted from a non-serving cell;

- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2,4,6,12\}$ may be given by a higher-layer parameter DL-PRS-NumSymbols. A comb size $K_{\text{comb}}^{\text{PRS}} \in \{2, 4, 6, 12\}$ may be given by a higher-layer parameter transmissionComb. A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, {4, 2}, {6, 2}, {12, 2}, {4, 4}, {12, 4}, {6, 6}, {12, 6} and/or {12, 12}. An RE offset $k_{\text{offset}}^{\text{PRS}} \in \{0,1,\ldots,K_{\text{comb}}^{\text{PRS}} - 1\}$ may be given by combOffset. A frequency offset $k'$ may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

k A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{ i T_{\text{gap}}^{\text{PRS}} \right\}_{i=0}^{T_{\text{rep}}^{\text{PRS}}-1}$$

$N_{\text{slot}}^{\text{frame},\mu}$ may be the number of slots per frame in the SCS configuration $\mu$. $n_{\text{f}}$ may be a system frame number (SFN).

$n_{\text{s,f}}^{\mu}$ may be a slot number in a frame in the SCS configuration $\mu$. A slot offset $T_{\text{offset}}^{\text{PRS}} \in \left\{ 0,1,\dots,T_{\text{per}}^{\text{PRS}} - 1 \right\}$ may be given by a higher-layer parameter *DL-PRS-ResourceSetSlotOffset*. ADL PRS resource slot offset $T_{\text{offset,res}}^{\text{PRS}}$ may be given by a higher layer parameter *DL-PRS-ResourceSlotOffset*. A periodicity $T_{\text{per}}^{\text{PRS}} \in \{4,5,8,10,16,20,32,40,64,80,160,320,640,1280,2560,5120,10240\}$ may be given by a higher-layer parameter *DL-PRS-Periodicity*. A repetition factor $T_{\text{rep}}^{\text{PRS}} \in \{1,2,4,6,8,16,32\}$ may be given by a higher-layer parameter **DL-PRS-ResourceRepetitionFactor**. A muting repetition factor $T_{\text{muting}}^{\text{PRS}}$ may be given by a higher-layer parameter *DL-PRS-MutingBitRepetitionFactor*. A time gap $T_{\text{gap}}^{\text{PRS}} \in \{1,2,4,8,16,32\}$ may be given by a higher-layer parameter *DL-PRS-ResourceTimeGap*.

### 2.3. UE Positioning Architecture

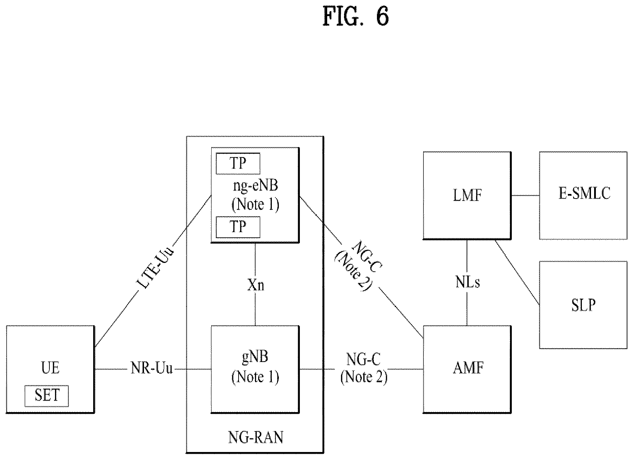

FIG. 6 illustrates an exemplary system architecture for measuring positioning of a UE to which various embodiments are applicable.

Referring to FIG. 6, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

Anew generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

### 2.4. Operation for UE Positioning

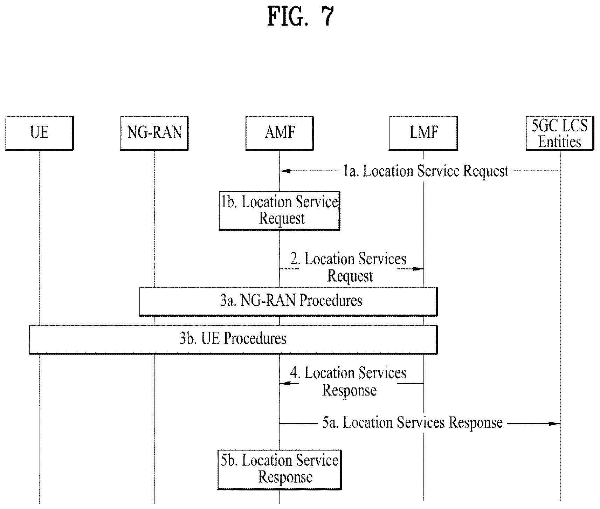

FIG. 7 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 7. In other words, in FIG. 7 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 7. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 7 has been initiated by step 1a, the AMF may transfer the location service response to a 5GC entity such as a GMLC. If the procedure of FIG. 7 has been initiated by step 1b, the AMF may use the location service response.

### 2.5. Positioning Protocol

LTE Positioning Protocol (LPP)

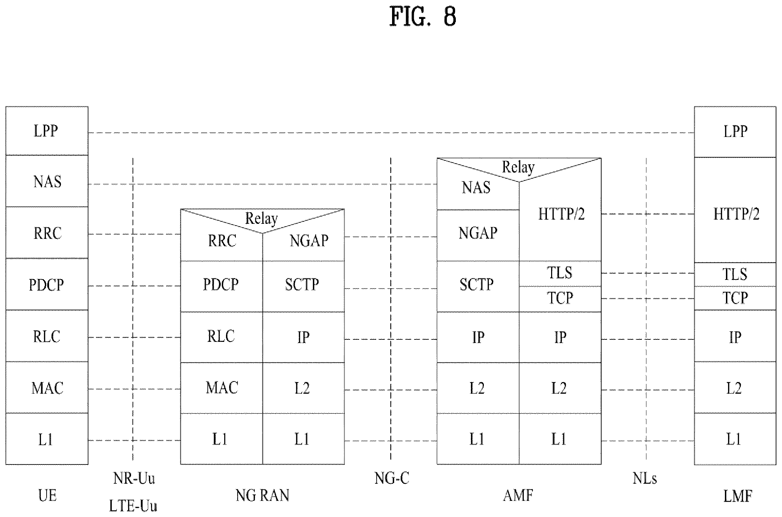

FIG. 8 illustrates an exemplary protocol layer used to support LPP message transfer between an LMF and a UE. An LPP protocol data unit (PDU) may be carried in a NAS PDU between an AMF and the UE.

Referring to FIG. 8, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

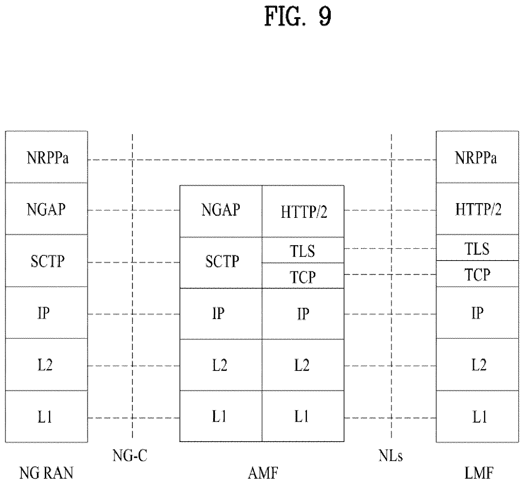

FIG.9 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

### 2.6. Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

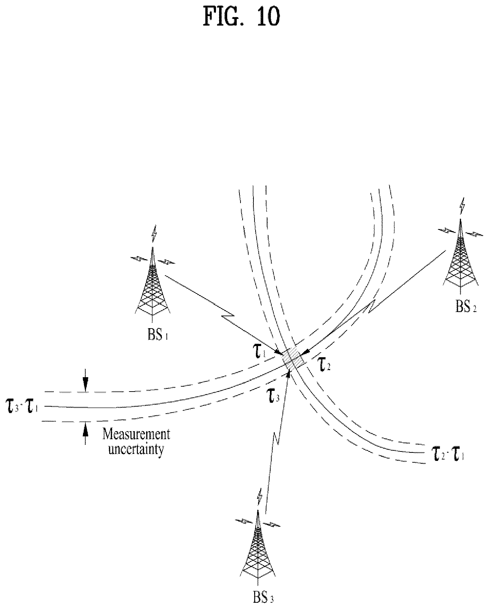

FIG. 10 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{xi, yi\}$ are (known) coordinates of a TP, and $\{xi, y_1\}$ are coordinates of a reference TP (or another TP). Here, $(T_i - T_i)$ is a transmission time offset between two TPs, referred to as "real time differences" (RTDs), and $ni$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoAmay be used to measure the direction of the UE. AoAis defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

Multi RTT (Multi-cell RTT)

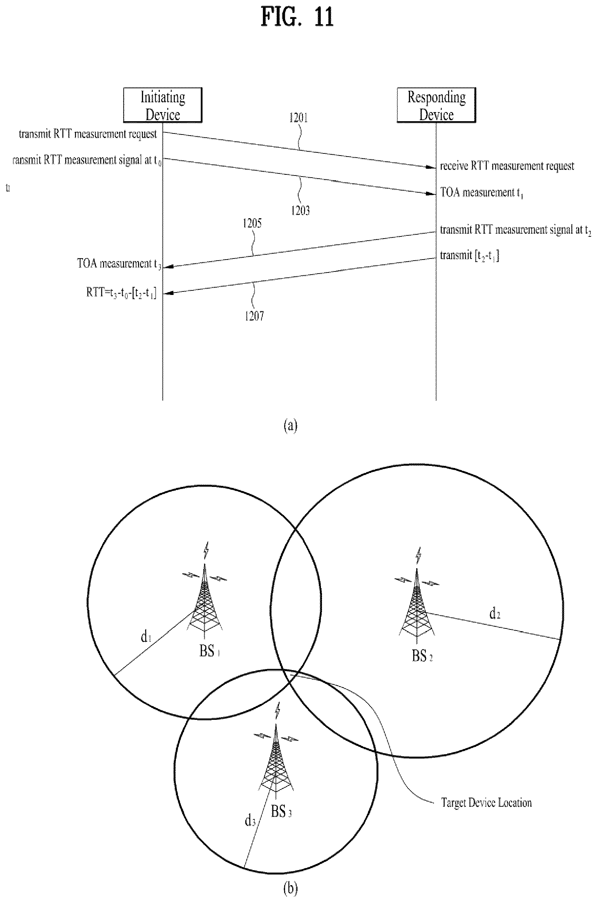

FIG. 11 is a diagram illustrating an exemplary multi-round trip time (multi-RTT) positioning method to which various embodiments are applicable.

Referring to FIG. 11(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

In operation 1301 according to various embodiments, the initiating device may transmit an RTT measurement request, and the responding device may receive the RTT measurement request.

In operation 1303 according to various embodiments, the initiating device may transmit an RTT measurement signal at t0 and the responding device may acquire a ToA measurement t1.

In operation 1305 according to various embodiments, the responding device may transmit an RTT measurement signal at t2 and the initiating device may acquire a ToA measurement t3.

In operation 1307 according to various embodiments, the responding device may transmit information about [t2-t1], and the initiating device may receive the information and calculate an RTT by Equation 6. The information may be transmitted and received based on a separate signal or in the RTT measurement signal of operation 1305.

[Equation 6]

$$RTT = t_3 - t_0 - [t_2 - t_1]$$

Referring to FIG. 11(b), an RTT may correspond to a double-range measurement between two devices. Positioning estimation may be performed from the corresponding information, and multilateration may be used for the positioning estimation, $d_1$, $d_2$, and $d_3$ may be determined based on the measured RTT, and the location of a target device may be determined to be the intersection of the circumferences of circles with radiuses of $d_1$, $d_2$, and $d_3$, in which BSi, $BS_2$, and $BS_3$ (or TRPs) are centered respectively.

**2.7. Sounding Procedure**

In a wireless communication system to which various embodiments are applicable, an SRS for positioning may be used.

An *SRS-Config* information element (IE) may be used to configure SRS transmission. (A list of) SRS resources and/or (a list of) SRS resource sets may be defined, and each resource set may be defined as a set of SRS resources.

The *SRS-Config* IE may include configuration information on an SRS (for other purposes) and configuration information on an SRS for positioning separately. For example, configuration information on an SRS resource set for the SRS (for other purposes) (e.g., *SRS-ResourceSet*) and configuration information on an SRS resource set for the SRS for positioning (e.g., *SRS-PosResourceSet*) may be included separately. In addition, configuration information on an SRS resource for the SRS (for other purposes) (e.g., *SRS-ResourceSet*) and configuration information on an SRS resource for the SRS for positioning (e.g., *SRS-PosResource*) may be included separately.

An SRS resource set for positioning may include one or more SRS resources for positioning. Configuration information on the SRS resource set for positioning may include: information on an identifier (ID) that is assigned/allocated/related to the SRS resource set for positioning; and information on an ID that is assigned/allocated/related to each of the one or more SRS resources for positioning. For example, configuration information on an SRS resource for positioning may include an ID assigned/allocated/related to a UL resource. In addition, each SRS resource/SRS resource set for positioning may be identified based on each ID assigned/allocated/related thereto.

The SRS may be configured periodically/semi-persistently/aperiodically.

An aperiodic SRS may be triggered by DCI. The DCI may include an SRS request field.

Table 6 shows an exemplary SRS request field.

[Table 6]

| Value of SRS request field | Triggered aperiodic SRS resource set(s) for DCI format 0_1, 0_2, 1_1, 1_2, and 2_3 configured with higher layer parameter srs-TPC-PDCCH-*Group* set to 'typeB' | Triggered aperiodic SRS resource set(s) for DCI format 2_3 configured with higher layer parameter srs-TPC-*PDCCH-Group* set to 'typeA' |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-Resource Trigger* set to 1 or an entry in *aperiodicSRS-Resource TriggerList* set to 1 SRS resource set(s) configured by *SRS-PosResourceSet* with an entry in *aperiodicSRS-Resource TriggerList* set to 1 when triggered by DCI formats 0_1, 0_2, 1_1, and 1_2 | SRS resource set(s) configured with higher layer parameter *usage* in *SRS-ResourceSet* set to 'antennaSwitching' and *resource Type* in *SRS-ResourceSet* set to 'aperiodic' for a 1st set of serving cells configured by higher layers |
| 10 | SRS resource set(s) configured by *SRS-ResourceSet* with higher layer parameter *aperiodicSRS-Resource Trigger* set to 2 or an entry in *aperiodicSRS-ResourceTriggerList* set to 2 SRS resource set(s) configured by *SRS-PosResourceSet* with an entry in *aperiodicSRS-Resource TriggerList* set to 2 when triggered by DCI formats 0_1, 0_2, 1_1, and 1_2 | SRS resource set(s) configured with higher layer parameter *usage* in *SRS-ResourceSet* set to 'antennaSwitching' and *resourceType* in *SRS-ResourceSet* set to 'aperiodic' for a 2nd set of serving cells configured by higher layers |
| 11 | SRS resource set(s) configured by *SRS-ResourceSet* with higher layer parameter aperiodicSRS-*Resource Trigger* set to 3 or an entry in *aperiodicSRS-Resource TriggerList* set to 3 SRS resource set(s) configured by *SRS-PosResourceSet with* an entry in *aperiodicSRS-Resource TriggerList* set to 3 when triggered by DCI formats a 1, 0 2, 1_1, and 1 2 | SRS resource set(s) configured with higher layer parameter *usage* in *SRS-ResourceSet* set to 'antennaSwitching' and *resourceType* in *SRS-ResourceSet* set to 'aperiodic' for a 3rd set of serving cells configured by higher layers |

In Table 6, srs-TPC-PDCCH-Group is a parameter for setting the triggering type for SRS transmission to type A or type B, aperiodicSRS-ResourceTriggerList is a parameter for configuring an additional list of DCI code points where the UE needs to transmit the SRS according to the SRS resource set configuration, aperiodicSRS-ResourceTrigger is a parameter for configuring a DCI code point where the SRS needs to be transmitted according to the SRS resource set configuration, and resourceType is a parameter for configuring (periodic/semi-static/aperiodic) time domain behavior of the SRS resource configuration.

3. Various Embodiments

A detailed description will be given of various embodiments based on the above technical ideas. The afore-described contents of Section 1 and Section 2 are applicable to various embodiments described below. For example, operations, functions, terminologies, and so on which are not defined in various embodiments may be performed and described based on Section 1 and Section 2.

Symbols/abbreviations/terms used in the description of various embodiments may be defined as follows.

- A/B/C: A and/or B and/or C
- AOA (AoA): angle of arrival
- comb: A comb may mean a method of mapping a signal at regular intervals in the frequency domain. For example, comb-2 (comb-2 or 2-comb) may mean that the same specific RS is mapped to each RE spaced apart by 2 subcarriers. For example, comb-4 (comb-4 or 4-comb) may mean that the same specific RS is mapped to each RE spaced apart by 4 subcarriers.
- CSI-RS: channel state information reference signal
- ECID: enhanced cell identifier
- GPS: global positioning system
- GNSS: global navigation satellite system
- LMF: location management function
- MAC: medium access control
- MAC-CE: MAC-control element
- NRPPa: NR positioning protocol a
- OTDOA (OTDoA) : observed time difference of arrival
- PRS: positioning reference signal
- RAT: radio access technology
- RS: reference signal
- RTT: round trip time
- RSRP: reference signal received power
- RSRQ: reference signal received quality
- RSTD: reference signal time difference / relative signal time difference
- SINR: signal to interference plus noise ratio)
- SNR: signal to noise ratio
- SRS: sounding reference signal. According to various embodiments, the SRS may be used for UL channel estimation based on multi-input multi-output (MIMO) and positioning measurement. In other words, according to various embodiments, the SRS may include a normal SRS and a positioning SRS. According to various embodiments, the positioning SRS may be understood as a UL RS configured and/or used for UE positioning. According to various embodiments, the normal SRS is different from the positioning SRS. Specifically, the normal SRS may be understood as a UL RS configured and/or used for UL channel estimation (additionally or alternatively, the normal SRS may be understood as a UL RS configured and/or used for UL channel estimation and positioning). According to various embodiments, the positioning SRS may also be referred to as an SRS for positioning. In the description of various embodiments, the following terms: 'positioning SRS' and 'SRS for positioning' may be used interchangeably and understood to have the same meaning. According to various embodiments, the normal SRS may also be referred to as a legacy SRS, a MIMO SRS, an SRS for MIMO, or the like. In the description of various embodiments, the following terms: 'normal SRS', 'legacy SRS', 'MIMO SRS', and 'SRS for MIMO' may be used interchangeably and understood to have the same meaning. For example, the normal SRS and the positioning SRS may be separately configured/indicated. For example, the normal SRS and the positioning SRS may be configured/indicated by different information elements (IEs) of higher layers. For example, the normal SRS may be configured based on *SRS-resource,* and the positioning SRS may be configured based on *SRS-PosResource.* In the description of various embodiments, the positioning SRS may be understood as an exemplary UL PRS.
- SS: synchronization signal
- SSB: synchronization signal block
- SS/PBCH: synchronization signal/physical broadcast channel
- TA: timing advance/time advance
- TDOA (TDoA): timing difference of arrival
- TOA (ToA): time of arrival
- TRP: transmission and reception point (TP: transmission point)
- UTDOA (UTDoA): uplink time difference of arrival

In the description of various embodiments, a base station (BS) may be understood as a generic term including a remote radio head (RRH), an eNB, a gNB, a TP, a reception point (RP), a relay, and the like.

In the description of various embodiments, the expression 'greater than/above A' may be replaced with the expression 'above/greater than A'.

In the description of various embodiments, the expression 'less than/below B' may be replaced with the expression 'below/less than B'.

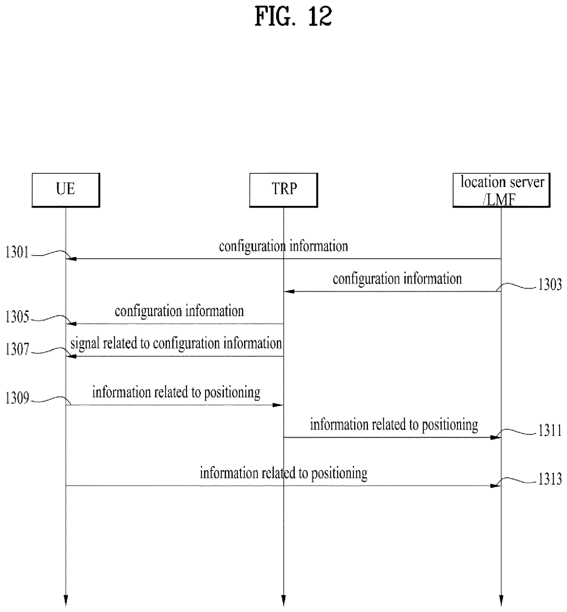

FIG. 12 is a simplified diagram illustrating an operating method of a UE, a TRP, a location server, and/or an LMF according to various embodiments.

Referring to FIG. 12, in operation 1301 according to various embodiments, the location server and/or the LMF may transmit configuration information to the UE, and the UE may receive the configuration information.

In operation 1303 according to various embodiments, the location server and/or the LMF may transmit reference configuration information to the TRP, and the TRP may receive the reference configuration information. In operation 1305 according to various embodiments, the TRP may transmit the reference configuration information to the UE, and the UE may receive the reference configuration information. In this case, operation 1301 according to various embodiments may be omitted.

In contrast, operations 1303 and 1305 according to various embodiments may be omitted. In this case, operation 1301 according to various embodiments may be performed.

That is, operation 1301 according to various embodiments, and operations 1303 and 1305 according to various embodiments may be selectively performed.

In operation 1307 according to various embodiments, the TRP may transmit a signal related to the configuration information, and the UE may receive the signal related to the configuration information. For example, the signal related to the configuration information may be a signal for positioning of the UE.

In operation 1309 according to various embodiments, the UE may transmit a signal related to positioning to the TRP, and the TRP may receive the signal related to positioning. In operation 1311 according to various embodiments, the TRP may transmit the signal related to positioning to the location server and/or the LMF, and the location server and/or the LMF may receive the signal related to positioning.

In operation 1313 according to various embodiments, the UE may transmit the signal related to positioning to the location server and/or the LMF, and the location server and/or the LMF may receive the signal related to positioning. In this case, operations 1309 and 1311 according to various embodiments may be omitted.

In contrast, operation 1313 according to various embodiments may be omitted. In this case, operations 1309 and 1311 according to various embodiments may be performed.

That is, operations 1309 and 1311 according to various embodiments, and operation 1313 according to various embodiments may be selectively performed.

According to various embodiments, the signal related to positioning may be obtained based on the configuration information and/or the signal related to the configuration information.

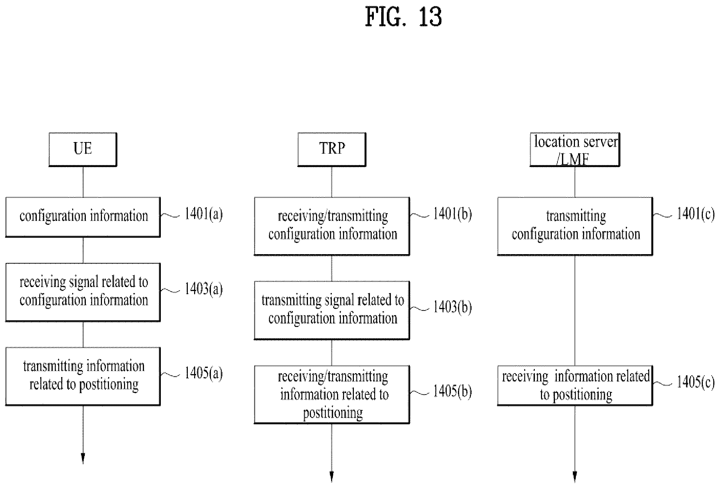

FIG. 13 is a simplified diagram illustrating an operating method of a UE, a TRP, a location server, and/or an LMF according to various embodiments.

Referring to FIG. 13(a), in operation 1401(a) according to various embodiments, the UE may receive configuration information.

In operation 1403(a) according to various embodiments, the UE may receive a signal related to the configuration information.

In operation 1405(a) according to various embodiments, the UE may transmit information related to positioning.

Referring to FIG. 13(b), in operation 1401(b) according to various embodiments, the TRP may receive configuration information from the location server and/or the LMF and transmit the configuration information to the UE.

In operation 1403(b) according to various embodiments, the TRP may transmit a signal related to the configuration information.

In operation 1405(b) according to various embodiments, the TRP may receive information related to positioning and transmit the information related to positioning to the location server and/or the LMF.

Referring to FIG. 13(c), in operation 1401(c) according to various embodiments, the location server and/or the LMF may transmit configuration information.

In operation 1405(c) according to various embodiments, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in the description of various embodiments below.

For example, the above signal related to positioning may be understood as a signal related to one or more pieces of information that the UE reports and/or a signal including one or more pieces of information that the UE reports, in the description of various embodiments below.

For example, in the description of various embodiments below, the BS, the gNB, and the cell may be replaced with the TRP, the TP, or any device serving equally as the TRP or the TP.

For example, in the description of various embodiments below, the location server may be replaced with the LMF and any device serving equally as the LMF.

More detailed operations, functions, terms, etc. in operation methods according to various embodiments may be performed and described based on various embodiments described later. The operation methods according to various embodiments are exemplary and one or more operations in the above-described operation methods may be omitted according to detailed content of each embodiment.

Hereinafter, various embodiments will be described in detail. It may be understood by those of ordinary skill in the art that the various embodiments described below may be combined in whole or in part to implement other embodiments unless mutually exclusive.

In a wireless communication system to which various embodiments are applicable, SRS transmission of a UE may refer to Table 7. Unless specifically stated otherwise, the contents of Table 7 may be applied to various embodiments.

[Table 7]

| |
|---|
| 6.2.1 UE sounding procedure |
| The UE may be configured with one or more Sounding Reference Signal (SRS) resource sets as configured by the higher layer parameter *SRS-ResourceSet* or *SRS-PosResourceSet.* For each SRS resource set configured by *SRS-ResourceSet,* a UE may be configured with $K \geq 1$ SRS resources (higher layer parameter *SRS-Resource*), where the maximum value of K is indicated by UE capability [13, 38.306]. When SRS resource set is configured with the higher layer parameter *SRS-PosResourceSet,* a UE may be configured with $K \geq 1$ SRS resources (higher layer parameter *SRS-PosResource*), where the maximum value of K is 16. The SRS resource set applicability is configured by the higher layer parameter *usage* in *SRS-ResourceSet.* When the higher layer parameter *usage* is set to 'beamManagement', only one SRS resource in each of multiple SRS resource sets may be transmitted at a given time instant, but the SRS resources in different SRS resource sets with the same time domain behaviour in the same BWP may be transmitted simultaneously. |
| For aperiodic SRS at least one state of the DCI field is used to select at least one out of the configured SRS resource set(s). |
| The following SRS parameters are semi-statically configurable by higher layer parameter *SRS-Resource* or *SRS-PosResource.* |
|      - *srs-ResourceId* or *SRS-PasResourceId* determines SRS resource configuration identity. |
|      - Number of SRS parts, as defined by the higher layer parameter *nrofSRS-Ports* and described in Clause 6.4.1.4 of [4, TS 38.211]. If not configured, *nrofSRS-Ports* is 1. |
|      - Time domain behaviour of SRS resource configuration as indicated by the higher layer parameter *resourceType,* which may be periodic, semi-persistent, aperiodic SRS transmission as defined in Clause 6.4.1.4 of [4, TS 38.211]. |
|      - Slot level periodicity and slot level offset as defined by the higher layer parameters *periodicityAndOffset-p* or *periodicityAndOffset-sp* for an SRS resource of type periodic or semi-persistent. The UE is not expected to be configured with SRS resources in the same SRS resource set *SRS-ResourceSet* or *SRS-PosResourceSet* with different slot level periodicities. For an *SRS-ResourceSet* configured with higher layer parameter *resourceType* set to 'aperiodic', a slot level offset is defined by the higher layer parameter *slotOffset.* For an *SRS-PosResourceSet* configured with higher layer parameter *resourceType* set to 'aperiodic', the slot level offset is defined by the higher layer parameter *slotOffset* for each SRS resource. |

(continued)

6.2.1 UE sounding procedure

- Number of OFDM symbols in the SRS resource, starting OFDM symbol of the SRS resource within a slot including repetition factor R as defined by the higher layer parameter *resourceMapping* and described in Clause 6.4.1.4 of [4, TS 38.211]. If R is not configured, then A is equal to the number of OFDM symbols in the SRS resource.

- SRS bandwidth $B_{SRS}$ and $C_{SRS}$, as defined by the higher layer parameter *freqHopping* and described in Clause 6.4.1.4 of [4, TS 38.211]. If not configured, then $B_{SRS} = 0$.

- Frequency hopping bandwidth $b_{hop}$, as defined by the higher layer parameter *freqHopping* and described in Clause 6.4.1.4 of [4, TS 38.211] . If not configured, then $b_{hop} = 0$.

- Defining frequency domain position and configurable shift, as defined by the higher layer parameters *freqDomainPosition* and *freqDomainShift*, respectively, and described in Clause 6.4.1.4 of [4, TS 38.211]. If *freqDomainPosition* is not *configured*, *freqDomainPosition* is zero.

- Cyclic shift, as defined by the higher layer parameter *cyclicShift-n2, cyclicShift-n4, or cyclicShift-n8* for transmission comb value 2, 4 or 8, and described in Clause 6.4.1.4 of [4, TS 38.211].

- Transmission comb value, as defined by the higher layer parameter *transmissionComb* described in Clause 6.4.1.4 of [4, TS 38.211].

- Transmission comb offset, as defined by the higher layer parameter *combOffset-n2, combOffset-n4,* and *combOffset-n8* for transmission comb value 2, 4, or 8, and described in Clause 6.4.1.4 of [4, TS 38.211].

- SRS sequence ID, as defined by the higher layer parameter *sequenceId* in Clause 6.4.1.4 of [4].

- The configuration of the spatial relation between a reference RS and the target SRS, where the higher layer parameter *spatialRelationInfo* or *spatialRelationInfoPos,* if configured, contains the ID of the reference RS. The reference RS may be an SS/PBCH block, CSI-RS configured on serving cell indicated by higher layer parameter *servingCellId* if present, same serving cell as the target SRS otherwise, of an SRS configured on uplink BWP indicated by the higher layer parameter *uplinkBWP,* and serving cell indicated by the higher layer parameter *servingCellId* if present, same serving cell as the target SRS otherwise. When the target SRS is configured by the higher layer parameter *SRS-PosResourceSet,* the reference RS may also be a DL PRS configured on a serving cell or a non-serving cell indicated by the higher layer parameter *dl-PRS,* or an SS/PBCH block of a non-serving cell indicated by the higher layer parameter *ssb-Ncell.*

For example, as an RE pattern of a PRS/SRS used for UE positioning in an NR system, a staggered RE pattern may be supported.

First, a PRS resource having a staggered RE pattern will be described. For example, each OFDM symbol (of PRS/SRS resource) may have a comb-N type frequency RE pattern. That is, for example, each OFDM symbol may show a frequency RE pattern occupying one RE for every N frequency REs. For example, in the staggered RE pattern, this comb-N RE pattern is used over several symbols, but the comb-offset (e.g., frequency RE offset) for each symbol is different, and thus, in terms of one PRS resource configured over several symbols, not only a specific frequency RE is occupied, but various frequency REs are used for each symbol, and thus various frequency REs may be used.

For example, in relation to the staggered RE pattern of a PRS/SRS, for one PRS/SRS resource (single PRS resource) occupying N (a natural number > 1) OFDM symbol, the frequency-domain RE pattern of each OFDM symbol may be Comb-N. For example, the comb-offset (e.g., frequency-domain RE offset) for each OFDM symbol may be different from each other, and thus all and/or some subcarriers in the RB may be occupied by a PRS/SRS RE of a PRS/SRS resource.

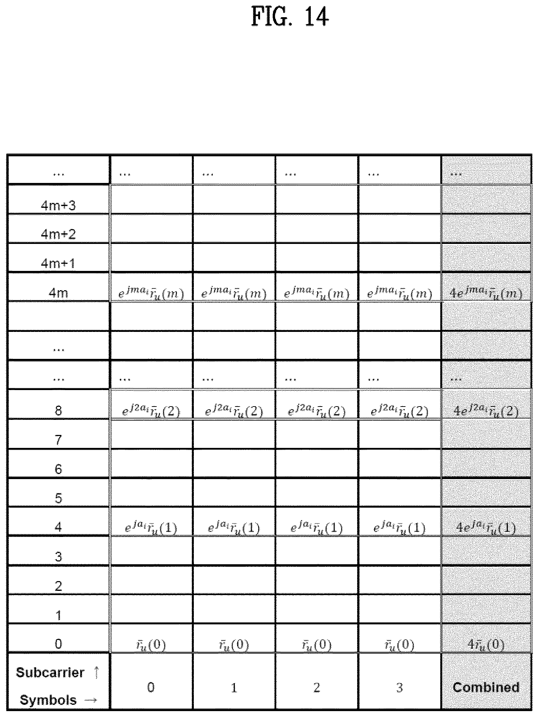

FIG. 14 is a diagram illustrating an example of an SRS resource pattern to which various embodiments are applicable.

For example, a sequence for basic SRSp transmission may be generated by a Zadoff-Chu (ZC) sequence generation method. For example, a generated sequence may be resource-mapped in a non-staggering pattern to transmit a signal. For example, a non-staggering pattern may be supported in a wireless communication system supporting Release 15 and previous releases. FIG. 14 and descriptions of various embodiments, m denotes an index (m-th sequence) indicating the m-th generated sequence, $a_i$ denotes a cyclic shift, and $\overline{r}_u(m)$ denotes a ZC sequence generated using a root index u, and may indicate a base sequence.

Referring to FIG. 14, for example, when a comb size is 4 and a symbol length is 4, a simple example of resource mapping for a sequence of a SRSp and/or SRS is illustrated. For example, a sequence of the SRSp and/or SRS may be mapped to subcarriers 0, 4, 8, ..., 4m in symbols 0, 1, 2, and 3 in a non-staggering pattern. For example, an RE to which a sequence of the SRSp and/or SRS is mapped may be a non-staggered pattern.

For example, when the SRSp and/or SRS are transmitted in a non-staggering pattern, the UE may repeatedly transmit the same sequence for REs having the same index for each symbol, and the BS may transmit the same sequence for each RE from which the signal is transmitted. Decoding may be performed by combining. The BS may perform decoding by combining each RE from which the signal is transmitted. In this case, in terms of reception (in terms of the BS), the ZC sequence characteristics of the SRSp and/or SRS may be maintained.

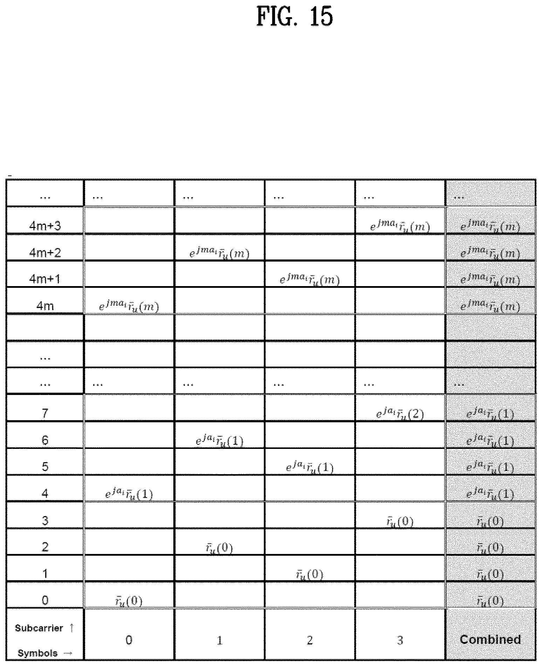

FIG. 15 is a diagram illustrating an example of an SRS resource pattern to which various embodiments are applicable.

In a wireless communication system supporting Release-16 and later releases, the staggered pattern SRSp (and/or SRS) may be supported. However, for example, when the SRSp is transmitted using a staggering pattern supported in a wireless communication system supporting Release-16 and later releases, phase discontinuity (stepwise) may occur in the case in which sequences are de-staggered (combined) for each transmitted symbol and seen. For example, a shift of the same phase by the comb size may continue.

For example, referring to FIG. 15 , when a comb size is 4 and a symbol length is 4, a simple example of resource mapping for the SRSp and/or SRS sequences is illustrated. A sequence of the SRSp may be from symbol 0 to subcarriers 0, 4,,,,, 4m, from symbol 1 to subcarriers 2, 6,...,4m+2, from symbol 2 to subcarriers 1, 5,...,4m+1, and from 3 to subcarriers 3, 7,...,4m+3. For example, an RE to which a sequence of the SRSp is mapped may be a staggered pattern.

In this case, due to the characteristics of the ZC sequence, when cross-correlation of two sequences is performed, peaks are generated not only at desired points but also at undesired points, resulting in performance degradation.. That is, in terms of recpeion (in terms of the BS), the characteristics of the ZC sequence of a destagged (combined) signal may be lost.

For example, when signals are combined in terms of reception (in terms of the BS), the signals are acquried to repeat $\overline{r}_u(0)$ for subcarriers 0, 1, 2, and 3, to repeat $e^{ja_i}\overline{r}_u(1)$ for subcarriers 4, 5, 6, and 7, and to repetae $e^{jma_i}\overline{r}_u(m)$ for subcarriers 4m, 4m+1, 4m+2, and 4m+3, and the characteristics of the ZC sequence of the signals may be lost.

As described above, when a resource mapping rule of a sequence used in a wireless communiation sytsem for supporting the existing release-15 is applied for the staggered pattern supported for the SRSp (and/or the SRS) in a wireless communication system supporting Release-16 and later releases, the characteristics of the ZC sequence of the destaggered (combined) signal is lost, which may affect reception performance degradation, as described above. However, transmission of the SRSp in a staggered pattern has advantages in terms of inter-symbol interference (ISI), power boosting, and resource utilization.

Various embodiments relate to a method of genreating a sequence suitable for a staggered pattern and a resource mapping method to maintain the characteristics of a ZC sequence while maintaining a staggered pattern when the SRSp (and/or the SRS) is transmitted in a staggered pattern.

Table 8 may be referred to for a resource mapping rule of a sequence used in a wireless communication system supporting the existing Release-15. In descriptions of various embodiments to be described later, definitions of parameters/IEs that are not separately mentioned may follow those described in Table 8.

[Table 8]

| |
|---|
| 5.2 Sequence generation |
| 5.2.1 Pseudo-random sequence generation<br><br>Generic pseudo-random sequences are defined by a length-31 Gold sequence. The output sequence $c(n)$ of length $M_{PN}$, where $n = 0,1,...,M_{PN}$ -1, is defined by |
| $$c(n) = \left(x_1(n+N_C) + x_2(n+N_C)\right) \bmod 2$$ $$x_1(n+31) = \left(x_1(n+3) + x_1(n)\right) \bmod 2$$ $$x_2(n+31) = \left(x_2(n+3) + x_2(n+2) + x_2(n+1) + x_2(n)\right) \bmod 2$$ where $N_C$ = 1600 and the first m-scqucncc $x_1(n)$ shall be initialized with $x_1(0) = 1, x_1(n) = 0, n = 1,2,...,30$. The initialization of the second m-scqucncc, $x_2(n)$, is denoted by<br><br>$$c_{\text{init}} = \sum_{i=0}^{30} x_2(i) \cdot 2^i$$ with the value depending on the application of the sequence. |
| 5.2.2 Low-PAPR sequence generation type 1<br><br>The low-PAPR sequence $r_{u,v}^{(\alpha,\delta)}(n)$ is defined by a cyclic shift $\alpha$ of a base sequence $\bar{r}_{u,v}(n)$ according to<br><br>$$r_{u,v}^{(\alpha,\delta)}(n) = e^{j\alpha n}\bar{r}_{u,v}(n), \quad 0 \le n < M_{ZC}$$<br>where $M_{ZC} = mN_{sc}^{RB}/2^{\delta}$ is the length of the sequence. Multiple sequences are defined from a single base sequence through different values of $\alpha$ and $\delta$.<br>Base sequences $\bar{r}_{u,v}(n)$ are divided into groups, where $u \in \{0,1,...,29\}$ is the group number and v is the base sequence number within the group, such that each group contains one base sequence (v = 0) of each length $M_{ZC} = mN_{sc}^{RB}/2^{\delta}$, $1/2 \le m/2^{\delta} < 5$ and two base sequences (v = 0,1) of each length $M_{ZC} = mN_{sc}^{RB}/2^{\delta}$, $6 \le m/2^{\delta}$. The definition of the base sequence $\bar{r}_{u,v}(0),...,\bar{r}_{u,v}(M_{ZC}-1)$ depends on the sequence length $M_{ZC}$. |
| 5.2.2.1 Base sequences of length 36 or larger<br><br>For $M_{ZC} \ge 3N_{sc}^{RB}$, the base sequence $\bar{r}_{u,v}(0),...,\bar{r}(M_{ZC}-1)$ is given by<br><br>$$\bar{r}_{u,v}(n) = x_q\left(n \bmod N_{ZC}\right)$$ $$x_q(m) = e^{-j\frac{\pi q m(m+1)}{N_{ZC}}}$$<br>where<br><br>$$q = \left\lfloor \bar{q} + 1/2 \right\rfloor + v \cdot (-1)^{\lfloor 2q \rfloor}$$ |

EP 4 280 761 A1

| |
|---|
| **5.2.2.1 Base sequences of length 36 or larger** $$\bar{q} = N_{ZC} \cdot (u+1)/31$$ The length $N_{ZC}$ is given by the largest prime number such that $N_{ZC} < M_{ZC}$. |
| **5.2.2.2 Base sequences of length less than 36** For $M_{ZC} \in \{6,12,18,24\}$ the base sequence is given by $$\bar{r}_{u,v}(n) = e^{j\varphi(n)\pi/4}, \quad 0 \le n \le M_{ZC} - 1$$ where the value of $\varphi(n)$ is given by Tables 5.2.2.2-1 to 5.2.2.2-4. For $M_{ZC} = 30$, the base sequence $\bar{r}_{u,v}(0),...,\bar{r}_{u,v}(M_{ZC} - 1)$ is given by $$\bar{r}_{u,v}(n) = e^{-j\frac{\pi(u+1)(n+1)(n+2)}{31}}, \quad 0 \le n \le M_{ZC} - 1$$ |
| **6.4.1.4 Sounding reference signal** **6.4.1.4.1 SRS resource** An SRS resource is configured by the *SRS-Resource* IE or the *SRS-PosResource* IE and consists of<br><br>- $N_{ap}^{SRS} \in \{1,2,4\}$ antenna ports $\{p_i\}_{i=0}^{N_{ap}^{SRS}-1}$, where the number of antenna ports is given by the higher layer parameter *nrofSRS-Ports* if configured, otherwise $N_{ap}^{SRS} = 1$, and $p_i$ = 1000 + $i$ when the SRS resource is in a SRS resource set with higher-layer parameter *usage* in *SRS-ResourceSet* not set to 'nonCodebook', or determined according to [6, TS 38.214] when the SRS resource is in a SRS resource set with higher-layer parameter *usage* in *SRS-ResourceSet* set to 'nonCodebook'<br><br>- $N_{symb}^{SRS} \in \{1,2,4,8,12\}$ consecutive OFDM symbols given by the field *nrofSymbols* contained in the higher layer parameter *resourceMapping*<br><br>- $l_0$, the starting position in the time domain given by $l_0 = N_{symb}^{slot} - 1 - l_{offset}$ where the offset $l_{offset} \in \{0,1,...,13\}$ counts symbols backwards from the end of the slot and is given by the field *startPosition* contained in the higher layer parameter *resourceMapping* and $l_{offset} \geq N_{symb}^{SRS} - 1$ |

EP 4 280 761 A1

6.4.1.4 Sounding reference signal

- $k_0$, the frequency-domain starting position of the sounding reference signal

6.4.1.4.2 Sequence generation

The sounding reference signal sequence for an SRS resource shall be generated according to

$$r^{(p_i)}(n, l') = r_{u,v}^{(\alpha_i, \delta)}(n)$$

$$0 \leq n \leq M_{sc,b}^{SRS} - 1$$

$$l' \in \{0, 1, \ldots, N_{symb}^{SRS} - 1\}$$

where $M_{sc,b}^{SRS}$ is given by clause 6.4.1.4.3, $r_{u,v}^{(\alpha,\delta)}(n)$ is given by clause 5.2.2 with $\delta = \log_2(K_{TC})$ and the transmission comb number $K_{TC} \in \{2,4,8\}$ is contained in the higher-layer parameter *transmissionComb*. The cyclic shift $\alpha_i$ for antenna port $p_i$ is given as

$$\alpha_i = 2\pi \frac{n_{SRS}^{cs,i}}{n_{SRS}^{cs,max}}$$

$$n_{SRS}^{cs,i} = \left( n_{SRS}^{cs} + \frac{n_{SRS}^{cs,max}(p_i - 1000)}{N_{ap}^{SRS}} \right) \bmod n_{SRS}^{cs,max},$$

where $n_{SRS}^{cs} \in \{0, 1, \ldots, n_{SRS}^{cs,max} - 1\}$ is contained in the higher layer parameter *transmissionComb*. The maximum number of cyclic shifts $n_{SRS}^{cs,max}$ are given by Table 6.4.1.4.2-1.

The sequence group $u = \left( f_{gh}(n_{s,f}^{\mu}, l') + n_{ID}^{SRS} \right) \bmod 30$ and the sequence number , in clause 5.2.2 depends on the higher-layer parameter *groupOrSequenceHopping* in the *SRS-Resource* IE or the *SRS-PosResource* IE. The SRS sequence identity $n_{ID}^{SRS}$ is given by the higher layer parameter *sequenceId* in the *SRS-Resource* IE, in which ease $n_{ID}^{SRS} \in \{0, 1, \ldots, 1023\}$, or the *SRS-PosResource-r16* IE, in which case $n_{ID}^{SRS} \in \{0, 1, \ldots, 65535\}$. The quantity $l' \in \{0, 1, \ldots, N_{symb}^{SRS} - 1\}$ is the OFDM symbol number within the SRS resource.

- if *groupOrSequenceHopping* equals 'neither', neither group, nor sequence hopping shall be used and

$$f_{gh}(n_{s,f}^{\mu}, l') = 0$$

$$v = 0$$

- if *groupOrSequenceHopping* equals 'groupHopping', group hopping but not sequence hopping shall be used and

**6.4.1.4.2 Sequence generation**

$$f_{\text{gh}}\left(n_{\text{s,f}}^{\mu},l'\right)=\left(\sum_{m=0}^{7}c\left(8\left(n_{\text{s,f}}^{\mu}N_{\text{symb}}^{\text{slot}}+l_0+l'\right)+m\right)\cdot 2^m\right)\bmod 30$$

$$v=0$$

where the pseudo-random sequence $c(i)$ is defined by clause 5.2.1 and shall be initialized with $c_{\text{init}}=n_{\text{ID}}^{\text{SRS}}$ at the beginning of each radio frame.

- if *groupOrSequenceHopping* equals 'sequenceHopping', sequence hopping but not group hopping shall be used and

$$f_{\text{gh}}\left(n_{\text{s,f}}^{\mu},l'\right)=0$$

$$v=\begin{cases}c\left(n_{\text{s,f}}^{\mu}N_{\text{symb}}^{\text{slot}}+l_0+l'\right) & M_{\text{sc},b}^{\text{SRS}}\geq 6N_{\text{sc}}^{\text{RB}}\\ 0 & \text{otherwise}\end{cases}$$

where the pseudo-random sequence $c(i)$ is defined by clause 5.2.1 and shall be initialized with $c_{\text{init}}=n_{\text{ID}}^{\text{SRS}}$ at the beginning of each radio frame.

**6.4.1.4.3 Mapping to physical resources**

When SRS is transmitted on a given SRS resource, the sequence $r^{(p_i)}(n,l')$ for each OFDM symbol $l'$ and for each of the antenna ports of the SRS resource shall be multiplied with the amplitude scaling factor $\beta_{\text{SRS}}$ in order to conform to the transmit power specified in [5, 38.213] and mapped in sequence starting with $r^{(p_i)}(0,l')$ to resource elements $(k, l)$ in a slot for each of the antenna ports $p_i$ according to

$$a_{K_{\text{TC}}k'+k_0^{(p_i)},l'+l_0}^{(p_i)}=\begin{cases}\dfrac{1}{\sqrt{N_{\text{ap}}}}\beta_{\text{SRS}}r^{(p_i)}(k',l') & k'=0,1,\ldots,M_{\text{sc},b}^{\text{SRS}}-1\quad l'=0,1,\ldots,N_{\text{symb}}^{\text{SRS}}-1\\ 0 & \text{otherwise}\end{cases}$$

The length of the sounding reference signal sequence is given by

$$M_{\text{sc},b}^{\text{SRS}}=m_{\text{SRS},b}N_{\text{sc}}^{\text{RB}}/K_{\text{TC}}$$

where $m_{\text{SRS},b}$ is given by a selected row of Table 6.4.1.4.3-1 with $b = B_{\text{SRS}}$ where $B_{\text{SRS}} \in \{0,1,2,3\}$ is given by the field *b-SRS* contained in the higher-layer parameter *freqHopping* if configured, otherwise $B_{\text{SRS}} = 0$. The row of the table is selected according to the index $C_{\text{SRS}} \in \{0,1,\ldots,63\}$ given by the field *c-SRS* contained in the higher-layer parameter *freqHopping*.

The frequency-domain starting position $k_0^{(p_i)}$ is defined by

EP 4 280 761 A1

28

6.4.1.4.3 Mapping to physical resources

$$k_0^{(p_i)} = \bar{k}_0^{(p_i)} + \sum_{b=0}^{B_{SRS}} K_{TC} M_{sc,b}^{SRS} n_b$$

where

$$\bar{k}_0^{(p_i)} = n_{shift} N_{sc}^{RB} + \left( k_{TC}^{(p_i)} + k_{offset}^{i'} \right) \bmod K_{TC}$$

$$k_{TC}^{(p_i)} = \begin{cases} \left( \bar{k}_{TC} + K_{TC}/2 \right) \bmod K_{TC} & \text{if } n_{SRS}^{cs} \in \{n_{SRS}^{cs,max}/2, \dots, n_{SRS}^{cs,max} - 1\} \text{ and } N_{ap}^{SRS} = 4 \text{ and } p_i \in \{1001, 1003\} \\ \bar{k}_{TC} & \text{otherwise} \end{cases}$$

If $N_{BWP}^{start} \leq n_{shift}$ the reference point for $k_0^{(p_i)} = 0$ is subcarrier 0 in common resource block 0, otherwise the reference point is the lowest subcarrier of the BWP.

If the SRS is configured by the IE *SRS-PosResource,* the quantity $k_{offset}^{i'}$ is given by Table 6.4.1.4.3-2, otherwise $k_{offset}^{i'} = 0$ .

The frequency domain shift value $n_{shjft}$ adjusts the SRS allocation with respect to the reference point grid and is contained in the higher-layer parameter *freqDomainShift* in the *SRS-Resource* IE or the *SRS-PosResource* IE. The transmission comb offset $\bar{k}_{TC} \in \{0,1, \dots, K_{TC} - 1\}$ is contained in the higher-layer parameter *transmissionComb* in the *SRS-Resource* IE or the *SRS-PosResource* IE and $n_b$ is a frequency position index.

Frequency hopping of the sounding reference signal is configured by the parameter $b_{hop} \in \{0,1,2,3\}$, given by the field *b-hop* contained in the higher-layer parameter *freqHopping* if configured, otherwise $b_{hop} = 0$.

If $b_{hop} \geq B_{SRS}$ , frequency hopping is disabled and the frequency position index $n_b$ remains constant (unless re-configured) and is defined by

$$n_b = \lfloor 4 n_{RRC} / m_{SRS,b} \rfloor \bmod N_b$$

for all $N_{symb}^{SRS}$ OFDM symbols of the SRS resource. The quantity $n_{RRC}$ is given by the higher-layer parameter *freqDomainPosition* if configured, otherwise $n_{RRC} = 0$. and the values of $m_{SRS,b}$ and $N_b$ for $b = B_{SRS}$ are given by the selected row of Table 6.4.1.4.3-1 corresponding to the configured value of $C_{SRS}$.

If $b_{hop} < B_{SRS}$ , frequency hopping is enabled and the frequency position indices $n_b$ are defined by

$$n_b = \begin{cases} \lfloor 4 n_{RRC} / m_{SRS,b} \rfloor \bmod N_b & b \leq b_{hop} \\ \left( F_b(n_{SRS}) + \lfloor 4 n_{RRC} / m_{SRS,b} \rfloor \right) \bmod N_b & \text{otherwise} \end{cases}$$

where $N_b$ is given by Table 6.4.1.4.3-1,

6.4.1.4.3 Mapping to physical resources

$$F_b(n_{SRS}) = \begin{cases} (N_b/2)\left\lfloor \dfrac{n_{SRS} \bmod \Pi^b_{b'=b_{hop}} N_{b'}}{\Pi^{b-1}_{b'=b_{hop}} N_{b'}} \right\rfloor + \left\lfloor \dfrac{n_{SRS} \bmod \Pi^b_{b'=b_{hop}} N_{b'}}{2\Pi^{b-1}_{b'=b_{hop}} N_{b'}} \right\rfloor \\ \lfloor N_b/2 \rfloor \left\lfloor n_{SRS}/\Pi^{b-1}_{b'=b_{hop}} N_{b'} \right\rfloor \end{cases}$$

if $N_b$ even if $N_b$ odd

and where $N_{bhop} = 1$ regardless of the value of $N_b$. The quantity $n_{SRS}$ counts the number of SRS transmissions. For the case of an SRS resource configured as aperiodic by the higher-layer parameter *resourceType*, it is given by $n_{SRS} = \lfloor l'/R \rfloor$ within the slot in which the $N_{symb}^{SRS}$ symbol SRS resource is transmitted. The quantity $R \leq N_{symb}^{SRS}$ is the repetition factor given by the field *repetitionFactor* if configured, otherwise $R = N_{symb}^{SRS}$. For the case of an SRS resource configured as periodic or semi-persistent by the higher-layer parameter *resourceType,* the SRS counter is given by

$$n_{SRS} = \left( \frac{N_{slot}^{frame,\mu} n_f + n_{s,f}^{\mu} - T_{offset}}{T'_{SRS}} \right) \cdot \left( \frac{N_{symb}^{SRS}}{R} \right) + \left\lfloor \frac{l'}{R} \right\rfloor$$

for slots that satisfy $\left( N_{slot}^{frame,\mu} n_f + n_{s,f}^{\mu} - T_{offset} \right) \bmod T_{SRS} = 0$. The periodicity $T_{SRS}$ in slots and slot offset $T_{offset}$ are given in clause 6.4.1.4.4.

**Table 6.4.1.4.3-1: SRS bandwidth configuration.**

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

Table 6.4.1.4.3-2: The offset $k_{\text{offset}}^{l'}$ for SRS as a function of $K_{\text{TC}}$ and $l'$.

| $K_{\text{TC}}$ | $k_{\text{offset}}^{0}, \dots, k_{\text{offset}}^{N_{\text{symb}}^{\text{SRS}}-1}$ | | | | |
|---|---|---|---|---|---|
| | $N_{\text{symb}}^{\text{SRS}} = 1$ | $N_{\text{symb}}^{\text{SRS}} = 2$ | $N_{\text{symb}}^{\text{SRS}} = 4$ | $N_{\text{symb}}^{\text{SRS}} = 8$ | $N_{\text{symb}}^{\text{SRS}} = 12$ |
| 2 | 0 | 0, 1 | 0, 1, 0, 1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

### 6.4.1.4.4 Sounding reference signal slot configuration

For an SRS resource configured as periodic or semi-persistent by the higher-layer parameter *resourceType*, a periodicity $T_{\text{SRS}}$ (in slots) and slot offset $T_{\text{offset}}$ are configured according to the higher-layer parameter *periodicityAndOffset-p* or *periodicityAndOffset-sp* in the *SRS-Resource* IE, or *periodicityAndOffset-p* or *periodicityAndOffset-sp* in the *SRS-PosResource* IE. Candidate slots in which the configured SRS resource may be used for SRS transmission are the slots satisfying

$$\left(N_{\text{slot}}^{\text{frame},\mu} n_{\text{f}} + n_{\text{s,f}}^{\mu} - T_{\text{offset}}\right) \bmod T_{\text{SRS}} = 0$$

SRS is transmitted as described in clause 11.1 of [5, TS 38.213].

The problem occurring when the sequence described in Table 8 to which the staggered pattern is applied is transmitted has been described above with reference to FIGS. 14 and 15. This problem may occur when sequences transmitted through a staggered pattern are de-staggered (combined) when received and viewed in a single symbol. This may be because the phases of the de-staggered (combined) signals are discontinuous.

For example, as the easiest way to compensate for this, a method of correcting a phase at a receiving side to make the phase continuous may be considered.

According to various embodiments, in the present disclosure without a separate correction process (at a receiving end), a method for resolving a corresponding problem without a correction process may be provided. According to various embodiments, when the SRSp and/or the SRS are transmitted using the method, the cross-correlation performance and/or cyclic shift size and usable root index may be obtained.

For example, according to a simple phase correction method, the length of sequence is $mN_{\text{sc}}^{\text{RB}}/2^{\delta}$ and is inversely proportional to a comb size $K_{\text{TC}} = 2^{\delta}$ becuase the same base sequence as the comb size is included for each same RE index.

For example, in the case of a non-staggered pattern, it may be appropriate that the length of an effective sequence is affected by the comb size since an RE index actually not used for SRS transmission is the same for each comb size.

However, when a signal is transmitted in a staggered pattern, an RE index actually used for transmission may be as large as the number of REs present in the BWP, and the signal may be transmitted with all REs present within the BWP. For example, a case in which a symbol length (and/or the number of symbols) $N_{symb}^{SRS}$ is equal to or longer than a comb size $K_{\text{TC}}$ may correspond to this case. That is, in the case of $K_{\text{TC}} \leq N_{symb}^{SRS}$, the UE may transmit the SRS and/or SRSp using all REs present within the configured BWP. For example, in the case of $K_{\text{TC}} > N_{symb}^{SRS}$, the number of REs actually used for the SRSp transmission may be smaller than that number (the number of REs present within the configured BWP).

Although the length of the sequence is actually be used/configured as much as the number of REs included in the BWP according to the comb size and symbol length, a fixed value and/or a smaller value than the value may be used according to the method described with reference to Table 8. For example, when the sequence generation and/or mapping method used in the non-staggered pattern is used as it is for transmission of the staggered pattern SRS, the length of the actually used sequence may be limited to $mN_{\text{sc}}^{\text{RB}}/2^{\delta}$. Due to the characteristics of the ZC sequence, a correlation value of the sequence may have a value of $1/\sqrt{M}_{ZC}$ when the sequence length is a prime number, which may be the same as a case in which even though the performance of correlation is increased by increasing the length of the sequence, this is not used, and which is the same as a case in which the usable cyclic shift and root index are not used by being limited.

According to various embodiments, a method of generating an SRS sequence suitable for a staggered pattern may be provided.

According to various embodiments, a rule of generating a base sequence may follow the ZC sequence generation rule detailed in Table 8. According to various embodiments, the length $M_{ZC,b}$ of a sequence generated from BWP b may vary according to a comb size and a symbol length (symbol number) for the SRS as follows.

1) When the symbol number $N_{symb}^{SRS}$ is equal to or greater than the comb size $K_{TC}$:

$$M_{ZC,b} = m_{\text{SRS},b} N_{\text{sc}}^{\text{RB}}$$

2) When the symbol number $N_{symb}^{SRS}$ is smaller than the comb size $K_{TC}$:

$$M_{ZC,b} = m_{\text{SRS},b} N_{\text{sc}}^{\text{RB}} / K_{\text{TC}} * N_{\text{symb}}^{\text{SRS}}$$

According to various embodiments, for BWP b, when the symbol number is equal to or greater than the comb size, the lenght of the sequence may be determined by multiplying $m_{\text{SRS},b}$ and $N_{\text{sc}}^{\text{RB}}$ .

According to various embodiments, for BWP b, when the symbol number is smaller than the comb size, the lenght of the sequence may be determined by multiplying $m_{\text{SRS},b}$, $N_{\text{sc}}^{\text{RB}}$ , a reciprocal of $K_{\text{TC}}$, and $N_{\text{symb}}^{\text{SRS}}$ .

Here, definition of each variable may refer to Tables 7 and 8, and may be summarized as follows.

$m_{\text{SRS},b}$: Refer to table 6.4.1.4.3-1 of Table 8. (Parameter related to frequency hopping) This may be a variable/parameter detrmined by a preconfigured mapping relationship between $C_{\text{SRS}}$ and $B_{\text{SRS}}$.

$N_{\text{sc}}^{\text{RB}}$ : Number of subcarriers per resource block. For emaple, $N_{\text{sc}}^{\text{RB}} = 12$ .

$K_{\text{TC}}$: Transmission comb number and/or transmission comb value and/or comb size

$N_{\text{symb}}^{\text{SRS}}$ : OFDM symbol number in SRS resource

According to various embodiments, in a given symbol length section, the ZC sequence may be generaed as many as the number of different RE indexes actually used for SRSp transmission. Mapping rules for sequences generated according to various embodiments to physical resources will be described later.

Mapping to physical resource

A method of mapping a sequence generated according to various embodiments to a physical resource will be described.

In the case of the sequence generaed according to various embodiments, the length of the sequence may be generated differently depending on the number of symbols and comb size. A physical resource mapping method for a ZC sequence having a the lenght that varies depending on the comb size and the number of symbols according to various embodiments will be described.

In a wireless communication system to which various embodiments are applicable (e.g., a wireless communication system supporting Release-16), a staggered pattern of an SRS may refer to Table 9. For more details, refer to Table 6.4.1.4.3-2 of Table 8 and related explanations.

[Table 9]

| Number of symbols / Comb size | 1 | 2 | 4 | 8 | 12 |
|---|---|---|---|---|---|
| 2 | {0} | {0, 1} | {0, 1, 0, 1} | N/A | N/A |
| 4 | N/A | {0, 2} | {0,2,1,3}, | {0,2,1,3, 0,2,1,3} | {0,2,1,3, 0,2,1,3, 0,2,1,3} |
| 8 | N/A | N/A | {0,4,2,6} | {0,4,2,6,1,5,3,7} | {0,4,2,6,1,5,3,7,0,4,2,6} |

Referring to Table 9, in a wireless communication system that basically supports Release-16, the staggered pattern for the SRSp may support a combination of a comb size of 2, 4, and 8 and one or more symbol numbers of 1, 2, 4, 8, and 12. Here, the RE pattern may be configured such that a given inter-symbol interval is as far apart as possible.

In the wireless communication system supporting Release-16, RE ($k,l$) mapping for a SRS sequence ($r^{(pi)}(n,l')$) in each symbol $l'$ for each antenna ($p_i$) may be defined as follows. Here, $\beta_{\text{SRS}}$ may be a variable for correcting transmit power, and $k$ may indicate indexing of an RE.

$$a^{(p_i)}_{K_{\text{TC}}k'+k_0^{(p_i)},\,l'+l_0} = \begin{cases} \dfrac{1}{\sqrt{N_{\text{ap}}}}\beta_{\text{SRS}}r^{(p_i)}(k',l') & k'=0,1,\ldots,M^{\text{SRS}}_{\text{sc},b}-1 \quad l'=0,1,\ldots,N^{\text{SRS}}_{\text{symb}}-1 \\ 0 & \text{otherwise} \end{cases}$$

Here, the lenght of the SRS may be defined according to $M^{\text{SRS}}_{\text{sc},b} = m_{\text{SRS},b}N^{\text{RB}}_{\text{sc}}/K_{\text{TC}}$ . $m_{\text{SRS},b}$ may be selected with reference to Table 6.4.1.4.3-1 of Section 3.1 based on configuration of a higher layer and more details are given above.

A starting point $k_0^{(p_i)}$ in the frequency domain may be defined as follows.

$$k_0^{(p_i)} = \bar{k}_0^{(p_i)} + \sum_{b=0}^{B_{\text{SRS}}} K_{\text{TC}}M^{\text{SRS}}_{\text{sc},b}n_b$$

Here, $\bar{k}_0^{(p_i)}$ and $k_{\text{TC}}^{(p_i)}$ may be as follows.

$$\bar{k}_0^{(p_i)} = n_{\text{shift}}N^{\text{RB}}_{\text{sc}} + \left(k_{\text{TC}}^{(p_i)} + k^{l'}_{\text{offset}}\right)\bmod K_{\text{TC}}$$

$$k_{\text{TC}}^{(p_i)} = \begin{cases} \left(\bar{k}_{\text{TC}} + K_{\text{TC}}/2\right)\bmod K_{\text{TC}} & \text{if } n^{\text{cs}}_{\text{SRS}} \in \left\{n^{\text{cs,max}}_{\text{SRS}}/2,\ldots,n^{\text{cs,max}}_{\text{SRS}}-1\right\} \text{ and } N^{\text{SRS}}_{\text{ap}}=4 \text{ and } p_i \in \{1001,1003\} \\ \bar{k}_{\text{TC}} & \text{otherwise} \end{cases}$$

Here, $n_b$ may represent a freuqency position index based on a BWP in which an SRS is transmitted. $n_{\text{shift}}$ may represent a value for correction in the frequency domain in order to allocate the SRS for a reference point grid and may have a value of {0,...,268}. $\bar{k}_{\text{TC}}$ may represent a transmission comb offset and may have a value of {0, ..., $K_{\text{TC}}$ - 1}. $k^{l'}_{\text{offset}}$ may represent an RE offset in each comb size based on a staggered pattern and a vaue thereof is determined in Table 9.

For more details, refer to Table 8.

According to various embodiments, a resource mapping method may be provided in which a staggered pattern is applied to a sequence generated according to various embodiments but the above-described problem is to be resolved.

For example, when the SRSp is transmitted in a staggered pattern, if a mapping rule and a sequence length used in the non-staggered pattern are applied, even if a sequence with a longer sequence length is generated and transmitted and has no problem, the sequence is not used, and a phase of the sequene needs to be additionally compensated for.

Various embodiments may provide a resource mapping method that allows different sequences to be transmitted for REs having different RE indexes that are actually used to achieve one continuous ZC sequence when destaggering and combining in terms of reception.

According to various embodiments, a resource mapping method suitable for a staggered pattern and/or an operation of a UE/BS according thereto may be as follows.

According to various embodiments, depending on a relationship between a sequence length $M_{sc,b}^{SRS}$ and a comb size $K_{TC}$, a resource mapping method with a sequence length and may be as follows.

Case1: When the comb size $K_{TC}$ is equal to a symbol length (symbol number) $N_{symb}^{SRS}$:

Step 1: According to various embodiments, a UE may generate a ZC sequence having a sequence length of $m_{SRS,b}N_{sc}^{RB}$.

Step 2: According to various embodiments, the UE may map and transmit sequentially generated sequences from the lowest RE index to all REs within the entire symbol length. According to various embodiments, sequence indexes jumped by the number of comb sizes based on a sequence assigned to the lowest RE index for each symbol for all N sequences may be sequentially mapped.

Step 3: According to various embodiments, a BS may perform decoding by destaggering and combining REs transmitted during each entire symbol length interval.

Embodiment 1

The case of $m_{SRS,b}$=12, $N_{sc}^{RB}=12$, $K_{TC}$ = 2, $N_{symb}^{SRS} = 2$, and $M_{sc,b}^{SRS} = m_{SRS,b}N_{sc}^{RB}$:

Embodiment 1 may be an example in which the symbol length and the comb size are the same.

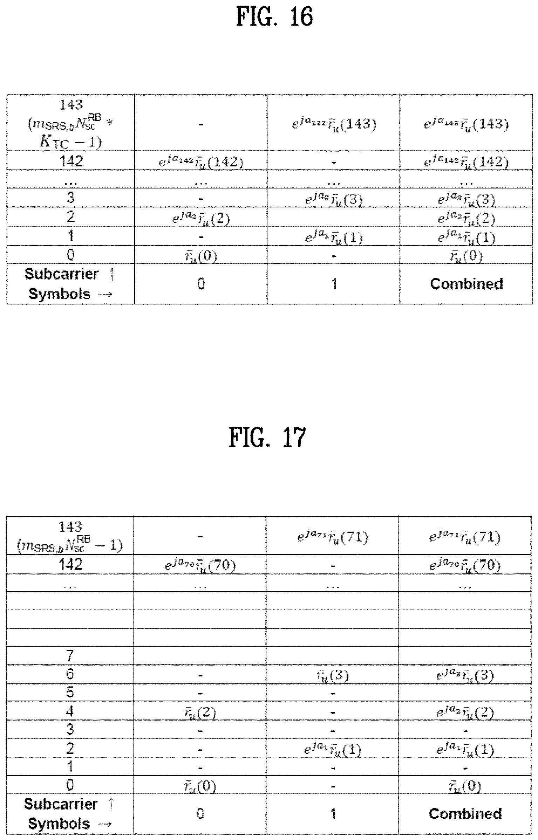

FIG. 16 is a diagram illustrating an example of an SRS resource mapping method according to various embodiments.

When a mapping rule with a sequence length, applied in the aforemenetioned non-staggered pattern, is applied, sequences transmitted from $r^{(pi)}(0,0)$ and $r^{(pi)}(1,1)$ may have the same value. That is, the sequences may have the same value as the comb size. For example, when the value of $m_{SRS,b}N_{sc}^{RB}$ is 144, it may be the same as that transmitted using a ZC sequence of a length of 72.

However, referring to FIG. 16, when a sequence is generated with a sequence length using a method according to various embodiments and a resource is mapped as described in step 2, a receiving end may destagger sequences received at $l'$ = 0 and $l'$ = 1 and combine the sequences into one symbol. According to various embodiments, it may be seen that the sequences combined by distaggering at the receiving end has the same form as the received ZC sequence of $m_{SRS,b}N_{sc}^{RB} = 144$. That is, $\bar{r}_u(0)$ for subcarrier 0, $e^{ja}\bar{r}_u(1)$ for subcarrier 1,..., and $e^{ja142}\bar{r}_u(142)$ for subcarrier 142 may be achieved, and a sequence transmitted for each subcarrier may vary. According to various embodiments, when the UE generates 144 ZC sequences at once and sequentially allocates and transmits the ZC sequences for each RE in one symbol, this may be the same as the result obtained at the receiving end.

Case2: When a comb size $K_{TC}$ is greater than a symbol length (symbol number) $N_{symb}^{SRS}$:

Step 1: According to various embodiments, the UE may generate a ZC sequence having a sequence length of $m_{SRS,b}N_{sc}^{RB}/K_{TC}*N_{symb}^{SRS}$.

Step 2: According to various embodiments, the UE may map and transmit sequentially generated sequences from the lowest RE index to all REs within the entire symbol length.

Step 3: According to various embodiments, the BS may perform decoding by destaggering and combining REs transmitted during each entire symbol length interval.

Embodiment 2

The case of $m_{SRS,b}$=12, $N_{sc}^{RB}=12$, $K_{TC}$ = 4, $N_{symb}^{SRS} = 2$, and $M_{sc,b}^{SRS} = m_{SRS,b}N_{sc}^{RB}$ :

Embodiment 2 may be an example for a case in which a comb size is greater than a sequence length.

FIG. 17 is a diagram illustrating an example of an SRS resource mapping method according to various embodiments.

Referring to FIG. 17, $\bar{r}_u(0)$ for subcarrier 0, $e^{ja_1}\bar{r}_u(1)$ for subcarrier 2, ..., and $e^{ja_{142}}\bar{r}_u(70)$ for subcarrier 142 may be achieved, and a sequence transmitted for each subcarrier may vary.

For example, since a symbol number is smaller than a comb size, the sequence may not be transmitted through all REs due to the characteristics of comb-type transmission. Therefore, the length of the sequence may be less than 1. For example, unlike Embodiment 1 and Example 3 (described later), it may be seen that the length of the entire sequence is reduced by $N_{symb}^{SRS}/K_{TC}$. However, since the length of the corresponding sequence is also longer than the previous $1/K_{TC}$ by a multiple of $N_{symb}^{SRS}$, it may be seen that cross-correlation performance is improved, and more cyclic shifts and root indexes may be used.

Case3: When a comb size $K_{TC}$ is smaller than a symbol lenght (symbol number) $N_{symb}^{SRS}$ :

Step 1: According to various embodiments, the UE may generate a ZC sequence having a sequence length of $m_{SRS,b}N_{sc}^{RB}$ (pieces).

Step 2: According to various embodiments, the UE may divide an interval into interval units in which a pattern is repeated within the entire symbol length, and for all REs for each interval, may transmit different through different REs for respective symbols using the same method as Step 1 of Case 1 within the repetition unit. According to various embodiments, the index of the corresponding sequence may have a value separated by the comb size based on the index of the sequence transmitted at the lowest RE of each symbol.

Step 3: According to various embodiments, the BS may perform decoding by destaggering and combining REs transmitted during each entire symbol length interval.

Embodiment 3

The case of $m_{SRS,b}$=12, $N_{sc}^{RB}=12$, $K_{TC}$ = 2, $N_{symb}^{SRS} = 4$, and $M_{sc,b}^{SRS} = m_{SRS,b}N_{sc}^{RB}$ :

Example 3 may be an example for a case where the sequence length is greater than the comb size.

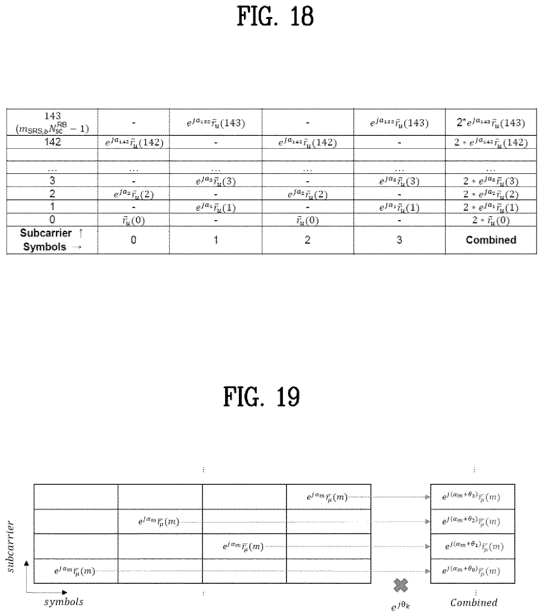

FIG. 18 is a diagram illustrating an example of an SRS resource mapping method according to various embodiments.

Referring to FIG. 18, for example, a UE may transmit the same sequence in REs having the same RE index at $l'$ = 0 and $l'$ = 3, and transmit the same signal in REs having the same RE index at $l'$ = 1 and $l'$ = 3. That is, the UE may repeatedly transmit signals as many as $N_{symb}^{SRS}/K_{TC}$. Different sequences may be transmitted for respective REs having different RE indexes within the corresponding repeated transmission period. That is, $2 * \bar{r}_u(0)$ for subcarrier 0, $2 * e^{ja_1}\bar{r}_u(1)$ for subcarrier 1,..., $2 * e^{ja_{142}}\bar{r}_u(142)$ for subcarrier 142 may be achieved, and a sequence transmitted for each subcarrier may vary. After all, in terms of reception, this may be the same as reception of $N_{symb}^{SRS}/K_{TC}$ continuous ZC sequences for each sequence.

A mathematical expression of a mapping method according to various embodiments may be as follows.

According to various embodiments, the UE may generate ZC sequence $r_{u,v}^{(\alpha_i,\delta)}(n)$ for SRSp transmission. According to various embodiments, a value of n may be $0 \leq n \leq M_{ZC,b}-1$.

According to various embodiments, the length $M_{ZC,b}$ of a sequence may vary depending on a symbol number and a comb size required for SRSp transmission.

1) When a symbol number $N_{symb}^{SRS}$ is greater than or equal to a comb size $K_{TC}$:

$$M_{ZC,b} = m_{\mathrm{SRS},b} N_{\mathrm{sc}}^{\mathrm{RB}}$$

2) When a symbol number $N_{symb}^{SRS}$ is smaller than a comb size $K_{TC}$:

$$M_{ZC,b} = m_{\mathrm{SRS},b} N_{\mathrm{sc}}^{\mathrm{RB}}/K_{\mathrm{TC}} * N_{\mathrm{symb}}^{\mathrm{SRS}}$$

According to various embodiments, the generated ZC sequence may be mapped to a physical resource according to the following equation and transmitted, and a mapping rule may vary according to a sequence length.
If

$$M_{ZC,b} = m_{\mathrm{SRS},b} N_{\mathrm{sc}}^{\mathrm{RB}}:$$

$$a_{K_{TC}*k'+k_0^{(p_i)},l'+l_0}^{(p_i)} = r_{u,v}^{(\alpha_i,\delta)}(n * K_{\mathrm{TC}} + k_{\mathrm{offset}}^{l'}),\ 0 \le n \le M_{ZC,b}/K_{\mathrm{TC}} - 1$$

Else If $M_{ZC,b} = m_{\mathrm{SRS},b} N_{\mathrm{sc}}^{\mathrm{RB}}/K_{\mathrm{TC}} * N_{\mathrm{symb}}^{\mathrm{SRS}}$:

$$a_{K_{TC}*k'+k_0^{(p_i)},l'+l_0}^{(p_i)} = r_{u,v}^{(\alpha_i,\delta)}(n * K_{\mathrm{TC}} + k_{\mathrm{offset}}^{l'}),\ 0 \le n \le M_{ZC,b} * N_{\mathrm{symb}}^{\mathrm{SRS}} - 1$$

According to various embodiments, a sequence length suitable for staggered patterns may be suggested.
According to various embodiments, a resource mapping method considering the comb size and symbol length suitable for the same sequence length may be proposed.
When a sequence transmitted using the method according to various embodiments is destaggered and combined at a receiving side, a complete ZC sequence may be obtained as it is. According to various embodiments, the SRSp may be transmitted using a longer sequence than in the case in which a sequence generation and resource allocation method used in a non-staggering pattern to a staggering pattern as it is, and thus cross-correlation performance, more cycles shifts, and root indices may be used. In addition, according to various embodiments, there is no need to separately consider phase compensation, which may be considered to compensate for problems caused by pamming used in the non-staggered pattern. There is no need to separately provide phase compensation that to considered to compensate for problems caused by mapping used in non-staggered pattern.
Methods according to various embodiments may be combined or independently used/implemented.

Embodiment: Sequence generation and resource mapping of positioning SRS

FIG. 19 is a diagram illustrating an example of an SRS resource pattern to which various embodiments are applicable.
In a wireless communication system supporting Release 16 to which various embodiments are applicable, the staggered RE pattern shown in Table 10 may be used for transmssion of a positioning SRS.

[Table 10]

**Table 6.4.1.4.3-2:**

| The offset $k_{offset}^{l'}$ for SRS as a function of $K_{TC}$ and $l'$. | | | | | |
|---|---|---|---|---|---|
| $K_{TC}$ | $k_{offset}^0, ..., k_{offset}^{N_{symb}^{SRS}-1}$ | | | | |
| | $N_{symb}^{SRS} = 1$ | $N_{symb}^{SRS} = 2$ | $N_{symb}^{SRS} = 4$ | $N_{symb}^{SRS} = 8$ | $N_{symb}^{SRS} = 12$ |
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

In a wireless communication system supporting Release 16 to which various embodiments are applicable, a problem that occurs when sequence generation and physical resource mapping for a non-staggered pattern are applied without changes are to a staggered pattern is not considered. Actually, when a staggering/destaggering operation is performed on the SRSp as described above, two disadvantages such as phase off and aliasing of a correlation peak may occur. This may be because phase discontinuity occurs when staggered patterns are destaggered (combined) at a receiving end.

Regarding this problem, several solutions may be proposed. For example, referring to FIG. 19, a method of adjusting a cyclic shift as a function of a staggered pattern such that phase offset increments between SRS-Pos (SRSp) subcarriers are the same may be introduced. For example, $e^{j\theta_k}$ may be introduced to adjust the cyclic shift. Accordingly, the combined signal may be seen as a bunch of identical sequences in terms of a receiving end. The number of identical sequences may vary depending on a comb size. FIG. 19 shows a case in which the comb size and the symbol length are each 4. In terms of the receiving end (BS), the combined sequence may have a bunch of same base sequences. However, although the correlation peak and aliasing is to be avoided with this method, the advantages of the staggered pattern may not be fully utilized.

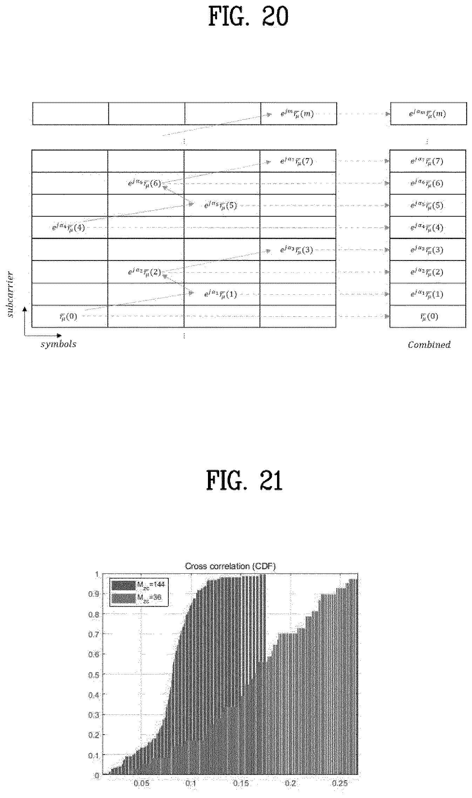

FIG. 20 is a diagram illustrating an example of an SRS resource pattern according to various embodiments. FIG. 20 shows a case in which a comb size and a symbol length are each 4.

FIG. 21 is a diagram showing comparison of cross-correlation performance between a sequence generation and resource mapping method according to various embodiments and a sequence generation and resource mapping method according to a conventional method.

Referring to FIG. 20, according to various embodiments, in a staggered RE pattern, different frequency REs may be used in different symbols within an SRS resource, and thus, a sequence element $\overline{r}_u(m)$ of each symbol may vary.

For example, a ZC sequence with a long sequence length may have lower cross-correlation performance than a ZC sequence with a short sequence length. For example, a cross-correlation between two prime lengths of ZC sequences may be a constant of $1/\sqrt{N_{ZC}}$ . Therefore, it may be better to use a sequence with a longer length than in the conventional method. Also, according to various embodiments, more cyclic shifts and root indices may be used. According to various embodiments, the number of maximum available sequence lengths may vary depending on a symbol number and a comb size.

Referring to FIG. 21 , a cross-correlation performance gap between a method according to various embodiments (using a longer ZC sequence) and a conventional method (using a relatively short ZC sequence) is shown. As described above, it may be seen that the cross-correlation performance is better in the case of the method according to various embodiments.

According to various embodiments, a method of determining a ZC sequence length considering a symbol lenght and a comb size of a resoruce in the SRSp may be proposed in consideration of a staggering pattern allows use of a longer ZC sequence than the non-staggering pattern. The staggering pattern may produce a longer ZC sequence than the non-staggering pattern. By making the ZC sequence longer, more cyclic shifts and root indices may be used, and cross-correlation performance may be improved. According to various embodiments, the maximum sequence length may depend on the symbol length and comb size of the SRS resource.

According to various embodiments, enhancement using a ZC sequence with a longer sequence length may be supported for better cross-correlation performance for the SRSp.

According to various embodiments, for an SRS resource, a long sequence may be generated as a value obtained by multiplying the length of an existing sequence by a comb size.

According to various embodiments, at least a part of the long sequence may be mapped to each symbol of the SRS resource.

According to various embodiments, a specific mapping rule may be proposed for sequence mapping of an SRS resource to each OFDM symbol. For example, when the number of symbols is greater than the comb size of the SRS, the same sequence may be repeatedly transmitted, which may need to be considered in a mapping rule when a longer ZC sequence is used.

According to various embodiments, a mapping rule may be proposed in the case of using a longer ZC sequence for transmission of the SRSp of a staggering pattern. According to various embodiments, each ZC sequence may be assigned from the lowest RE index to the highest RE index within a period of the staggering pattern.

According to various embodiments, when a SRSp having a staggered pattern is transmitted and transmission is completely destaggered at a receiving end, a transmission comb value may be equal to 1. When a mapping rule according to various embodiments is applied, an additional mechanism such as phase adjustment may not be required. Also, according to various embodiments, more cyclic shifts and more root indices may be used, and cross-correlation performance may be improved. According to various embodiments, the phase shift problem may be addressed. Referring to FIG. 19 , the phase shift may be linearly increased.

SRS enhancement for neighboring cell/TRP

In a wireless communication system supporting Release-16 to which various embodiments are applicable, a path-loss reference RS (RS) for SRS transmission power may be configured for each SRS resource set, but a transmission beam may be configured for each SRS resource. However, for the SRSp, SRS transmission may be intended to a neighboring cell/TRPBS to obtain measurements from multiple cells/BSs/TRPs. In this case, multiple SRS resources in the SRS resource set need to configured to intend the same target adjacent cell/BS/TRP, and thus the cell/BS/TRP configuration for the SRSp may be limited. For example, considering that transmission of SRS resources included in the same set may be intended for different adjacent cells, support of multi-path loss reference RSs may be required per SRS resource set, and additional association information with the path loss RS and spatial relation information may be needed.

According to various embodiments, it may be proposed that multiple DL RSs should be set for the path loss reference RS for each SRS resource set, and association between the multi-path loss RS and each SRS resource is required.

In a wireless communication system supporting Release-16 to which various embodiments are applicable, positioning introduces transmission beam configuration of an SRS resource for a target adjacent cell/BS/TRP, and specifies power control considering the adjacent cell/BS/TRP, and allows the UE to transmit an SRS resource intended to the target cell/BS/TRP. However, timing advance (TA) of SRS transmission may still be based on a serving cell. Since the serving cell-based TA is farther from the adjacent cell than the serving cell, it may cause an interference problem with the adjacent cell, and thus the cell/BS/TRP specific TA may be considered in Release-17 NR positioning. In addition, transmission timing change between SRS transmission points may be considered.

According to various embodiments, it may be proposed that for SRS resource transmission intended for a neighboring cell/BS/TRP, the TA of the SRS resource needs to be intended for the target neighboring cell/BS/TRP. For example, the SRS resource-specific TA configuration may be considered.

A method according to various embodiments may be used in combination with an orthogonal cover code (OCC). According to various embodiments, a specific SRS resource may be configured to be repeatedly transmitted N (>-=1) times in an intra-slot and/or an inter-slot. For example, a repetition factor for each SRS resource level and/or SRS resource aggregation level may be configured through higher layer signaling, and SRS resources may be repeatedly transmitted as much as the repetition factor. For example, time-frequency OCC may be configured such that different UEs use the same time-frequency resource during repeated transmission. For example, orthogonality is not ensured because cyclic shift is used in multiplexing of the UE, and the time-frequency OCC is used such that a cyclic shift gap used to distinguish between UEs and/or between antenna ports is further increased. From this, timing measurement performance may be improved.

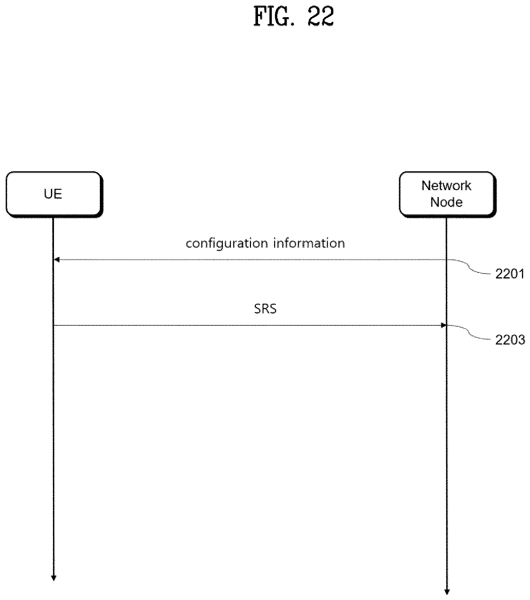

FIG. 22 is a diagram simply illustrating an operating method of a UE and network nodes according to various embodiments.

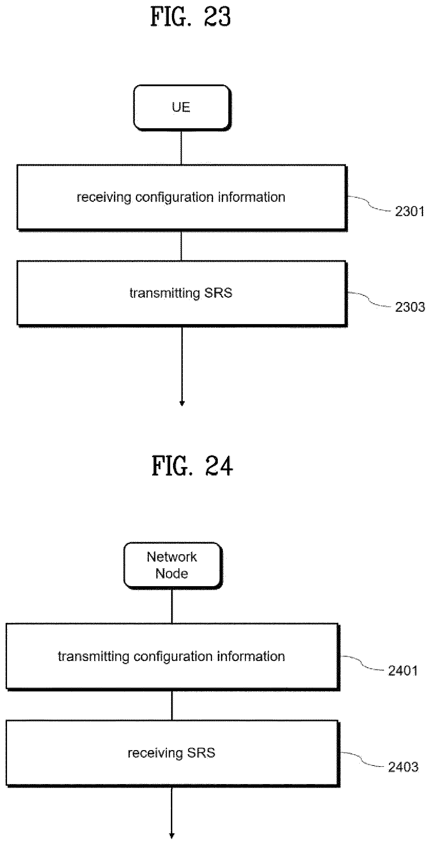

FIG. 23 is a flowchart illustrating an operating method of a UE according to various embodiments.

FIG. 24 is a flowchart illustrating an operating method of a network node according to various embodiments. For example, the network node may be a TP and/or a BS and/or a cell and/or a location server and/or an LMF and/or any device that performs the same operation.

Referring to FIGS. 22 to 24, in operations 2201, 2301, and 2401 according to various embodiments, the network node may transmit configuration information for the SRS, and the UE may receive the same.

In operations 2203, 2303, and 2403 according to various embodiments, the UE may transmit an SRS based on configuration information, and the network node may receive the same.

According to various embodiments, the configuration information may include: (i) first information on the number of consecutive orthogonal frequency division multiplexing (OFDM) symbols included in the SRS resource in which the SRS is transmitted, and (ii) second information on a comb size of the SRS resource.

According to various embodiments, the length of the SRS sequence for the SRS may be determined based on the first information and the second information.

More specific operations of the UE and/or the network node according to various embodiments described above may be described and performed based on the contents of Sections 1 to 3 described above.

Since the examples of the above-described proposal method may also be included as one of various embodiments, it is obvious that the examples may be regarded as a type of proposed method. In addition, the above-described proposed methods may be implemented independently, but may also be implemented in a combination (or merged) form of some proposed methods. Information on whether the proposed methods are applied (or information on rules of the proposed methods) may be defined such that the BS informs the UE through a predefined signal (e.g., a physical layer signal or a higher layer signal).

## 44. Exemplary Configurations of Devices Implementing Various embodiments

### 4.1. Exemplary configurations of devices to which various embodiments are applied

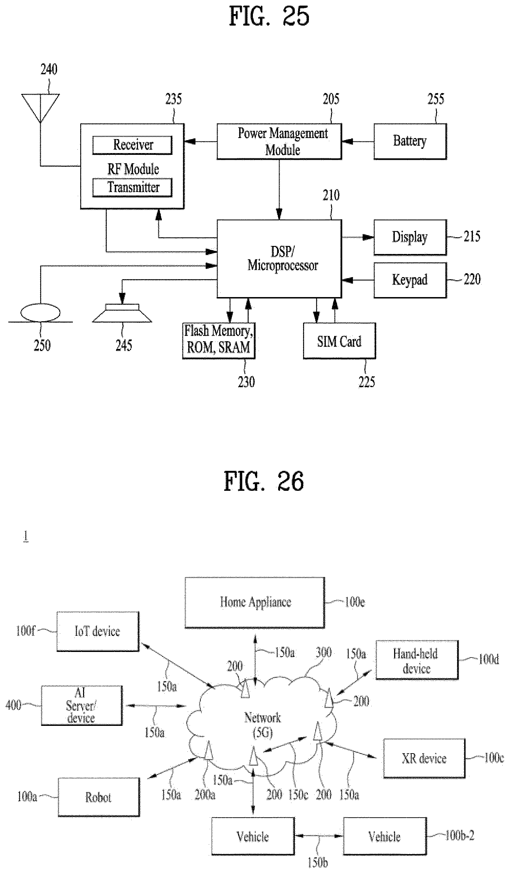

FIG. 25 is a diagram illustrating a device that implements various embodiments.

The device illustrated in FIG. 25 may be a UE and/or a BS (e.g., eNB or gNB or TP) and/or a location server (or LMF) which is adapted to perform the above-described mechanism, or any device performing the same operation.

Referring to FIG. 25, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer's selection.

Particularly, FIG. 25 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 25 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor of a UE (or a communication device included in the UE) and/or a BS (or a communication device included in the BS) and/or a location server (or a communication device included in the location server) may operate by controlling a memory, as follows.

According to various embodiments, the UE or the BS or the location server may include at least one transceiver, at least one memory, and at least one processor coupled to the at least one transceiver and the at least one memory. The at least one memory may store instructions which cause the at least one processor to perform the following operations.

The communication device included in the UE or the BS or the location server may be configured to include the at least one processor and the at least one memory. The communication device may be configured to include the at least one transceiver or to be coupled to the at least one transceiver without including the at least one transceiver.

The TP and/or the BS and/or the cell and/or the location server and/or the LMF and/or any device performing the same operation may be referred to as a network node.

According to various embodiments, one or more processors included in a UE (or one or more processors of a communication device included in the UE) may receive configuration information for a sounding reference signal (SRS).

According to various embodiments, one or more processors included in a UE may transmit the SRS based on the configuration information.

According to various embodiments, the configuration information includes: (i) first information on the number of consecutive orthogonal frequency division multiplexing (OFDM) symbols included in an SRS resource in which the SRS is transmitted, and (ii) second information on a comb size of the SRS resource.

According to various embodiments, the length of the SRS sequence for the SRS may be determined based on the first information and the second information.

According to various embodiments, one or more processors included in a network node (or one or more processors of a communication device included in the network node) may transmit configuration information for a sounding reference signal (SRS).

According to various embodiments, one or more processors included in a network node may receive the SRS in response to the configuration information.

According to various embodiments, the configuration information includes: (i) first information on the number of consecutive orthogonal frequency division multiplexing (OFDM) symbols included in an SRS resource in which the SRS is received, and (ii) second information on a comb size of the SRS resource.

According to various embodiments, the length of the SRS sequence for the SRS may be determined based on the first information and the second information.

More specific operations of the processor included in the UE and/or the network node according to various embodiments described above may be described and performed based on the contents of Sections 1 to 3 described above.

Various embodiments may be combined/combined with each other unless incompatible with each other. For example, a UE and/or a network node (a processor included therein) according to various embodiments may perform a combination/combined operation of the above-described embodiments of Sections 1 to 3 unless they are incompatible.

4.2. Example of communication system to which various embodiments are applied

Various embodiments have been mainly described in relation to data transmission and reception between a BS and a UE in a wireless communication system. However, various embodiments are not limited thereto. For example, various embodiments may also relate to the following technical configurations.

The various descriptions, functions, procedures, proposals, methods, and/or operational flowcharts of the various embodiments described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 26 illustrates an exemplary communication system to which various embodiments are applied.

Referring to FIG. 26, a communication system 1 applied to the various embodiments includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the various embodiments.

Example of wireless devices to which various embodiments are applied

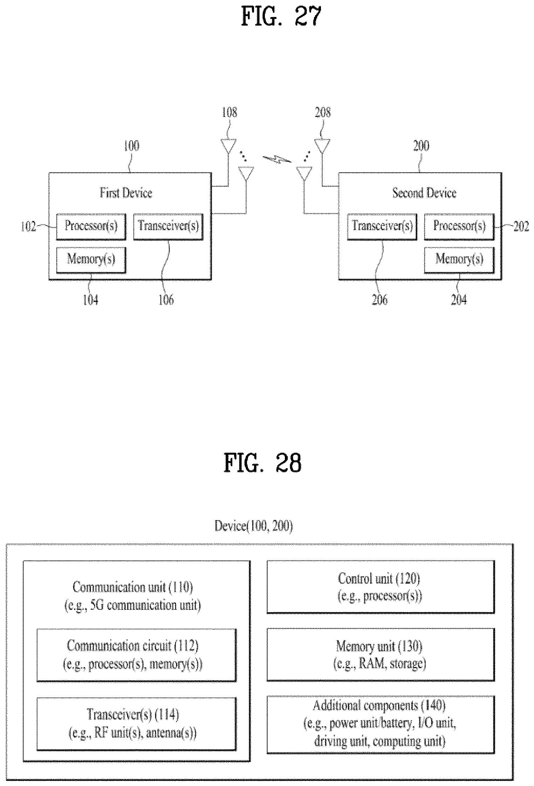

FIG. 27 illustrates exemplary wireless devices to which various embodiments are applicable.

Referring to FIG. 27, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 26.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the various embodiments, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the various embodiments, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments, one or more memories (e.g., 104 or 204) may store instructions or programs which, when executed, cause one or more processors operably coupled to the one or more memories to perform operations according to various embodiments or implementations of the present disclosure.

According to various embodiments, a computer-readable storage medium may store at least one instruction or computer programs which, when executed by one or more processors, cause the one or more processors to perform operations according to various embodiments or implementations of the present disclosure.

According to various embodiments, a processing device or apparatus may include one or more processors and one or more computer memories connected to the one or more processors. The one or more computer memories may store instructions or programs which, when executed, cause the one or more processors operably coupled to the one or more memories to perform operations according to various embodiments or implementations of the present disclosure.

Example of using wireless devices to which various embodiments are applied

FIG. 28 illustrates other exemplary wireless devices to which various embodiments are applied. The wireless devices may be implemented in various forms according to a use case/service (see FIG. 26).

Referring to FIG. 28, wireless devices 100 and 200 may correspond to the wireless devices 100 and 200 of FIG. 27 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 27. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 26), the vehicles (100b-1 and 100b-2 of FIG. 26), the XR device (100c of FIG. 26), the hand-held device (100d of FIG. 26), the home appliance (100e of FIG. 26), the IoT device (100f of FIG. 26), a digital broadcast terminal, a hologram device, a public safety device, an MTC device, a medicine device, a Fintech device (or a finance device), a security device, a climate/environment device, the AI server/device (400 of FIG. 26), the BSs (200 of FIG. 26), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 28 will be described in detail with reference to the drawings.

Example of portable device to which various embodiments are applied

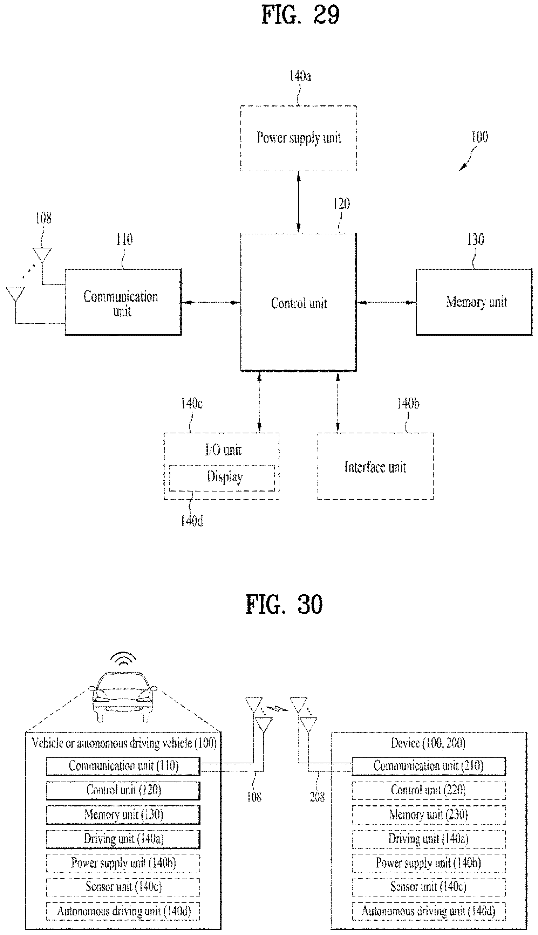

FIG. 29 illustrates an exemplary portable device to which various embodiments are applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 29, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 28, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which various embodiments.

FIG. 30 illustrates an exemplary vehicle or autonomous driving vehicle to which various embodiments. The vehicle or autonomous driving vehicle may be implemented as a mobile robot, a car, a train, a manned/unmanned aerial vehicle (AV), a ship, or the like.

Referring to FIG. 30, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 28, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, various embodiments may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode multi-band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which various embodiments are implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to various embodiments may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to various embodiments may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

Various embodiments may be implemented in various means. For example, various embodiments may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the various embodiments may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the various embodiments may be carried out in other specific ways than those set forth herein without departing from the spirit and essential characteristics of the various embodiments. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

## INDUSTRIAL APPLICABILITY

The various embodiments are applicable to various wireless access systems including a 3GPP system, and/or a 3GPP2 system. Besides these wireless access systems, the various embodiments are applicable to all technical fields in which the wireless access systems find their applications. Moreover, the proposed method may also be applied to mmWave communication using an ultra-high frequency band.

**Claims**

1. A method performed by a user equipment (UE) in a wireless communication system, the method comprising:

   receiving configuration information on a sounding reference signal (SRS); and
   transmitting the SRS based on the configuration information,
   wherein:

   the configuration information includes (i) first information on a number of consecutive orthogonal frequency division multiplexing (OFDM) symbols included in an SRS resource in which the SRS is transmitted and (ii) second information on a comb size of the SRS resource; and
   a length of an SRS sequence for the SRS is determined based on the first information and the second information.

2. The method of claim 1, wherein the length of the SRS sequence is determined based on comparison between the number of the OFDM symbols and the comb size.

3. The method of claim 1, wherein:

   based on that the number of the OFDM symbols is equal to or greater than the comb size, the length of the SRS sequence is determined to satisfy a product of a parameter determined based on a bandwidth part (BWP) in which the SRS is transmitted and a number of subcarriers per resource block (RB); and

based on that the number of the OFDM symbols is less than the comb size, the length of the SRS sequence is determined to satisfy a product of the parameter determined based on the BWP in which the SRS is transmitted, the number of subcarriers per RB, a reciprocal of the comb size, and the number of the OFDM symbols.

4. The method of claim 1, wherein:

the SRS resource includes a plurality of resource elements (REs);

the SRS sequence is mapped to the plurality of REs based on that mapping is performed from an RE having a lowest RE index among the plurality of REs to an RE having a highest RE index among the plurality of REs; and

in mapping of the SRS sequence to the plurality of REs,

based on that the number of the OFDM symbols is equal to or greater than the comb size, the number of SRS sequences is determined to satisfy a product of the length of the SRS sequence and a reciprocal of the comb size, and

based on the number of the OFDM symbols is less than the comb size, the number of the SRS sequences is determined to satisfy a product of the length of the SRS sequence and the number of the OFDM symbols.

5. The method of claim 1, wherein based on that the SRS is an SRS for positioning, the length of the SRS sequence is determined based on the first information and the second information.

6. A user equipment (UE) operating in a wireless communication system, the UE comprising:

a transceiver; and

one or more processors connected to the transceiver,

wherein the one or more processors is configured to:

receive configuration information on a sounding reference signal (SRS); and

transmit the SRS based on the configuration information;

wherein the configuration information includes (i) first information on a number of consecutive orthogonal frequency division multiplexing (OFDM) symbols included in an SRS resource in which the SRS is transmitted and (ii) second information on a comb size of the SRS resource; and

a length of an SRS sequence for the SRS is determined based on the first information and the second information.

7. The UE of claim 6, wherein the length of the SRS sequence is determined based on comparison between the number of the OFDM symbols and the comb size.

8. The UE of claim 6, wherein:

based on that the number of the OFDM symbols is equal to or greater than the comb size, the length of the SRS sequence is determined to satisfy a product of a parameter determined based on a bandwidth part (BWP) in which the SRS is transmitted and a number of subcarriers per resource block (RB); and

based on that the number of the OFDM symbols is less than the comb size, the length of the SRS sequence is determined to satisfy a product of the parameter determined based on the BWP in which the SRS is transmitted, the number of subcarriers per RB, a reciprocal of the comb size, and the number of the OFDM symbols.

9. The UE of claim 6, wherein:

the SRS resource includes a plurality of resource elements (REs);

the SRS sequence is mapped to the plurality of REs based on that mapping is performed from an RE having a lowest RE index among the plurality of REs to an RE having a highest RE index among the plurality of REs; and

in mapping of the SRS sequence to the plurality of REs,

based on that the number of the OFDM symbols is equal to or greater than the comb size, the number of SRS sequences is determined to satisfy a product of the length of the SRS sequence and a reciprocal of the comb size, and

based on the number of the OFDM symbols is less than the comb size, the number of the SRS sequences is determined to satisfy a product of the length of the SRS sequence and the number of the OFDM symbols.

10. The UE of claim 6, wherein based on that the SRS is an SRS for positioning, the length of the SRS sequence is determined based on the first information and the second information.

11. The UE of claim 6, wherein the one or more processors are configured to communicate with one or more of a mobile terminal, a network, and an autonomous vehicle other than a vehicle including the UE.

12. A method performed by a base station (BS) in a wireless communication system, comprising:

transmitting configuration information on a sounding reference signal (SRS); and
receiving the SRS in response to the configuration information,
wherein:

the configuration information includes (i) first information on a number of consecutive orthogonal frequency division multiplexing (OFDM) symbols included in an SRS resource in which the SRS is received and (ii) second information on a comb size of the SRS resource; and
a length of an SRS sequence for the SRS is determined based on the first information and the second information.

13. A base station (BS) operating in a wireless communication system, comprising:

a transceiver; and
one or more processors connected to the transceiver,
wherein the one or more processors are configured to:

transmit configuration information on a sounding reference signal (SRS); and
receive the SRS in response to the configuration information,
wherein:

the configuration information includes (i) first information on a number of consecutive orthogonal frequency division multiplexing (OFDM) symbols included in an SRS resource in which the SRS is received and (ii) second information on a comb size of the SRS resource; and
a length of an SRS sequence for the SRS is determined based on the first information and the second information.

14. A device operating in a wireless communication system, comprising:

one or more processors; and
one or more memories operatively connected to the one or more processors and configured to store one or more instructions that cause the one or more processors to perform an operation based on the operation being executed,
wherein the operation includes:

receiving configuration information on a sounding reference signal (SRS); and
transmitting the SRS based on the configuration information;
the configuration information includes (i) first information on a number of consecutive orthogonal frequency division multiplexing (OFDM) symbols included in an SRS resource in which the SRS is transmitted and (ii) second information on a comb size of the SRS resource; and
a length of an SRS sequence for the SRS is determined based on the first information and the second information.

15. A non-transitory processor-readable medium for storing one or more instructions that cause one or more processors to perform an operation, the operation comprising:

receiving configuration information on a sounding reference signal (SRS); and
transmitting the SRS based on the configuration information;
the configuration information includes (i) first information on a number of consecutive orthogonal frequency division multiplexing (OFDM) symbols included in an SRS resource in which the SRS is transmitted and (ii) second information on a comb size of the SRS resource; and

a length of an SRS sequence for the SRS is determined based on the first information and the second information.

## FIG. 1

System Information  
Initial Cell Search | Reception | Random Access Procedure | General DL/UL Tx/Rx

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11 — S12 — S13 — S14 — S15 — S16 — S17

S18

• DL/UL ACK/NACK  
• UE CQI/PMI/Rank Report using PUSCH and PUCCH

EP 4 280 761 A1

# FIG. 2

Radio Frame 10ms

Fixed Size

Subframe 1ms

| 0 | 1 | 2 | 3 | 4 | 5 | 6 | 7 | 8 | 9 |

Subframe = {1, 2, 4} Slots

Slot

| 0 | 1 | 2 | 3 |

Subframe = {7, 14} Symbols

Symbol

| 0 | 1 | 2 | 3 | 4 | 5 | 6 | 7 | 8 | 9 | 10 | 11 | 12 | 13 |

Mini-Slot
(URLLC)

Mini-Slot = {2, 4, 7} Symbols

Size depends
on subcarrier
spacing

# FIG. 3

Resource grid

A carrier
(up to 3300 subcarriers, i. e., 275 RBs)

A BWP

1 RB = 12 subcarriers

1 RE

1 subcarrier

1 symbol

k=0

l=0 · · · · ·

# FIG. 4

# FIG. 5

Reference
Source

GNSS signals (B)

LPP

Measurements(A,B or A+B) or Location

Assistance Data

Target
Device

UE/SET

Location
server

E-SMLC/SLP/LMF

radio signals (A)

Reference
Source

ACCESS NODE / BS / TS / NG-RAN

- E-CID Location Information Transfer
- OTDOA Information Transfer
- Reporting of General Error Situations

NRPPa

# FIG. 6

```
          ┌──────────────┐
          │ ┌────┐       │              ┌────────┐     ┌────────┐
          │ │ TP │       │              │        │     │        │
          │ └────┘       │              │  LMF   │─────│ E-SMLC │
          │ ng-eNB       │              │        │     │        │
          │ (Note 1)     │              └────────┘     └────────┘
          │ ┌────┐       │                  │
          │ │ TP │       │                  │
          │ └────┘       │                  │ NLs
          │    │         │                  │
          │    │ Xn      │              ┌────────┐     ┌────────┐
┌──────┐  │    │         │              │        │     │        │
│  UE  │  │ ┌──────┐     │  NG-C        │  AMF   │     │  SLP   │
│┌────┐│──│ │ gNB  │─────│ (Note 2)─────│        │     │        │
││SET ││  │ │(Note1)     │              └────────┘     └────────┘
│└────┘│  │ └──────┘     │
└──────┘  │              │
          │   NG-RAN     │
          └──────────────┘
```

UE — SET

LTE-Uu

NR-Uu

NG-C (Note 2)

NG-RAN

# FIG. 7

# FIG. 8

EP 4 280 761 A1

# FIG. 9

NG RAN      NG-C      AMF      NLs      LMF

EP 4 280 761 A1

# FIG. 10

$\tau_3 \cdot \tau_1$

Measurement
uncertainty

$\tau_1$

$\tau_2$

$\tau_3$

$\tau_2 \cdot \tau_1$

BS$_1$

BS$_2$

BS$_3$

# FIG. 11

| Initiating Device | | Responding Device |
|---|---|---|
| transmit RTT measurement request | 1201 | |
| transmit RTT measurement signal at $t_0$ | | receive RTT measurement request |
| $t_l$ | 1203 | TOA measurement $t_1$ |
| 1205 | | transmit RTT measurement signal at $t_2$ |
| TOA measurement $t_3$ | | transmit $[t_2-t_1]$ |
| RTT=$t_3$-$t_0$-$[t_2$-$t_1]$ | 1207 | |

(a)

$d_1$ BS$_1$

$d_2$ BS$_2$

$d_3$ BS$_3$

Target Device Location

(b)

# FIG. 12

```
     UE              TRP        location server
                                    /LMF

1301          configuration information
     ◄──────────────────────────────────────

                    configuration information
                    ◄──────────────────────── 1303

1305      configuration information
     ◄────────────────────────────

1307  signal related to configuration information
     ◄────────────────────────────

1309  information related to positioning
     ────────────────────────────────►

              information related to positioning
              ──────────────────────────────────► 1311

     information related to positioning
     ─────────────────────────────────────────────► 1313
```

# FIG. 13

# FIG. 14

| ... | ... | ... | ... | ... | ... |
|---|---|---|---|---|---|
| 4m+3 | | | | | |
| 4m+2 | | | | | |
| 4m+1 | | | | | |
| 4m | $e^{jma_i}\bar{r}_u(m)$ | $e^{jma_i}\bar{r}_u(m)$ | $e^{jma_i}\bar{r}_u(m)$ | $e^{jma_i}\bar{r}_u(m)$ | $4e^{jma_i}\bar{r}_u(m)$ |
| | | | | | |
| ... | | | | | |
| ... | ... | ... | ... | ... | ... |
| 8 | $e^{j2a_i}\bar{r}_u(2)$ | $e^{j2a_i}\bar{r}_u(2)$ | $e^{j2a_i}\bar{r}_u(2)$ | $e^{j2a_i}\bar{r}_u(2)$ | $4e^{j2a_i}\bar{r}_u(2)$ |
| 7 | | | | | |
| 6 | | | | | |
| 5 | | | | | |
| 4 | $e^{ja_i}\bar{r}_u(1)$ | $e^{ja_i}\bar{r}_u(1)$ | $e^{ja_i}\bar{r}_u(1)$ | $e^{ja_i}\bar{r}_u(1)$ | $4e^{ja_i}\bar{r}_u(1)$ |
| 3 | | | | | |
| 2 | | | | | |
| 1 | | | | | |
| 0 | $\bar{r}_u(0)$ | $\bar{r}_u(0)$ | $\bar{r}_u(0)$ | $\bar{r}_u(0)$ | $4\bar{r}_u(0)$ |
| Subcarrier ↑<br>Symbols → | 0 | 1 | 2 | 3 | Combined |

# FIG. 15

| Subcarrier ↑ / Symbols → | 0 | 1 | 2 | 3 | Combined |
|---|---|---|---|---|---|
| ... | ... | ... | ... | ... | ... |
| 4m+3 | | | | $e^{jma_i}\bar{r}_u(m)$ | $e^{jma_i}\bar{r}_u(m)$ |
| 4m+2 | | $e^{jma_i}\bar{r}_u(m)$ | | | $e^{jma_i}\bar{r}_u(m)$ |
| 4m+1 | | | $e^{jma_i}\bar{r}_u(m)$ | | $e^{jma_i}\bar{r}_u(m)$ |
| 4m | $e^{jma_i}\bar{r}_u(m)$ | | | | $e^{jma_i}\bar{r}_u(m)$ |
| | | | | | |
| ... | | | | | |
| ... | ... | ... | ... | ... | ... |
| 7 | | | | $e^{ja_i}\bar{r}_u(2)$ | $e^{ja_i}\bar{r}_u(1)$ |
| 6 | | $e^{ja_i}\bar{r}_u(1)$ | | | $e^{ja_i}\bar{r}_u(1)$ |
| 5 | | | $e^{ja_i}\bar{r}_u(1)$ | | $e^{ja_i}\bar{r}_u(1)$ |
| 4 | $e^{ja_i}\bar{r}_u(1)$ | | | | $e^{ja_i}\bar{r}_u(1)$ |
| 3 | | | | $\bar{r}_u(0)$ | $\bar{r}_u(0)$ |
| 2 | | $\bar{r}_u(0)$ | | | $\bar{r}_u(0)$ |
| 1 | | | $\bar{r}_u(0)$ | | $\bar{r}_u(0)$ |
| 0 | $\bar{r}_u(0)$ | | | | $\bar{r}_u(0)$ |

# FIG. 16

| Subcarrier ↑ Symbols → | 0 | 1 | Combined |
|---|---|---|---|
| $143$ $(m_{SRS,b}N_{sc}^{RB} * K_{TC} - 1)$ | - | $e^{ja_{132}}\bar{r}_u(143)$ | $e^{ja_{142}}\bar{r}_u(143)$ |
| 142 | $e^{ja_{142}}\bar{r}_u(142)$ | - | $e^{ja_{142}}\bar{r}_u(142)$ |
| ... | ... | ... | ... |
| 3 | - | $e^{ja_2}\bar{r}_u(3)$ | $e^{ja_2}\bar{r}_u(3)$ |
| 2 | $e^{ja_2}\bar{r}_u(2)$ | | $e^{ja_2}\bar{r}_u(2)$ |
| 1 | - | $e^{ja_1}\bar{r}_u(1)$ | $e^{ja_1}\bar{r}_u(1)$ |
| 0 | $\bar{r}_u(0)$ | - | $\bar{r}_u(0)$ |

# FIG. 17

| Subcarrier ↑ Symbols → | 0 | 1 | Combined |
|---|---|---|---|
| $143$ $(m_{SRS,b}N_{sc}^{RB} - 1)$ | - | $e^{ja_{71}}\bar{r}_u(71)$ | $e^{ja_{71}}\bar{r}_u(71)$ |
| 142 | $e^{ja_{70}}\bar{r}_u(70)$ | - | $e^{ja_{70}}\bar{r}_u(70)$ |
| ... | ... | ... | ... |
| | | | |
| | | | |
| | | | |
| 7 | | | |
| 6 | - | $\bar{r}_u(3)$ | $e^{ja_3}\bar{r}_u(3)$ |
| 5 | - | - | |
| 4 | $\bar{r}_u(2)$ | - | $e^{ja_2}\bar{r}_u(2)$ |
| 3 | - | - | - |
| 2 | - | $e^{ja_1}\bar{r}_u(1)$ | $e^{ja_1}\bar{r}_u(1)$ |
| 1 | - | - | - |
| 0 | $\bar{r}_u(0)$ | - | $\bar{r}_u(0)$ |

# FIG. 18

| 143 ($m_{SRS,b}N_{SC}^{RB} - 1$) | - | $e^{ja_{122}}\bar{r}_u(143)$ | - | $e^{ja_{142}}\bar{r}_u(143)$ | $2^* e^{ja_{142}}\bar{r}_u(143)$ |
|---|---|---|---|---|---|
| 142 | $e^{ja_{142}}\bar{r}_u(142)$ | - | $e^{ja_{142}}\bar{r}_u(142)$ | - | $2 * e^{ja_{142}}\bar{r}_u(142)$ |
| | | | | | |
| ... | ... | ... | ... | ... | ... |
| 3 | - | $e^{ja_2}\bar{r}_u(3)$ | - | $e^{ja_2}\bar{r}_u(3)$ | $2 * e^{ja_2}\bar{r}_u(3)$ |
| 2 | $e^{ja_2}\bar{r}_u(2)$ | - | $e^{ja_2}\bar{r}_u(2)$ | - | $2 * e^{ja_2}\bar{r}_u(2)$ |
| 1 | - | $e^{ja_1}\bar{r}_u(1)$ | - | $e^{ja_1}\bar{r}_u(1)$ | $2 * e^{ja_1}\bar{r}_u(1)$ |
| 0 | $\bar{r}_u(0)$ | - | $\bar{r}_u(0)$ | - | $2 * \bar{r}_u(0)$ |
| Subcarrier ↑ Symbols → | 0 | 1 | 2 | 3 | Combined |

# FIG. 19

# FIG. 20

# FIG. 21

# FIG. 22

```
┌──────┐                                          ┌──────────┐
│  UE  │                                          │ Network  │
│      │                                          │  Node    │
└──────┘                                          └──────────┘
   │                                                   │
   │              configuration information            │
   │◄──────────────────────────────────────────────── │
   │                                                   │  ─── 2201
   │                                                   │
   │                      SRS                          │
   │ ─────────────────────────────────────────────────►│
   │                                                   │  ─── 2203
   │                                                   │
   │                                                   │
   │                                                   │
   ▼                                                   ▼
```

# FIG. 23

```
┌──────────┐
│    UE    │
└────┬─────┘
     │
┌────┴─────────────────────────────┐
│  receiving configuration information │──── 2301
└────┬─────────────────────────────┘
     │
┌────┴─────────────────────────────┐
│         transmitting SRS          │──── 2303
└────┬─────────────────────────────┘
     │
     ▼
```

# FIG. 24

```
┌──────────┐
│ Network  │
│  Node    │
└────┬─────┘
     │
┌────┴─────────────────────────────┐
│ transmitting configuration information │──── 2401
└────┬─────────────────────────────┘
     │
┌────┴─────────────────────────────┐
│          receiving SRS            │──── 2403
└────┬─────────────────────────────┘
     │
     ▼
```

# FIG. 25

# FIG. 26

# FIG. 27

First Device (100)

108

208

200 Second Device

102 — Processor(s)  Transceiver(s)

Memory(s)

104    106

Transceiver(s)  Processor(s) — 202

Memory(s)

206    204

# FIG. 28

Device(100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

# FIG. 29

# FIG. 30

## INTERNATIONAL SEARCH REPORT

| International application No. |
|---|
| **PCT/KR2022/000930** |

| A. | CLASSIFICATION OF SUBJECT MATTER |
|---|---|
| | **H04W 72/04**(2009.01)i; **H04L 5/00**(2006.01)i |

According to International Patent Classification (IPC) or to both national classification and IPC

| B. | FIELDS SEARCHED |
|---|---|

Minimum documentation searched (classification system followed by classification symbols)

H04W 72/04(2009.01); H04L 27/26(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS, 콤(comb), 심볼(symbol), 시퀀스(sequence)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110535607 B (HUAWEI TECHNOLOGIES CO., LTD.) 07 August 2020 (2020-08-07)<br>See paragraphs [0005]-[0095]; and claims 1-26. | 1,5-6,10-15 |
| A | | 2-4,7-9 |
| Y | HUAWEI et al. Positioning enhancement in Rel-17. R1-2007577, 3GPP TSG RAN WG1 Meeting #103-e. 01 November 2020.<br>See section 3.1. | 1,5-6,10-15 |
| Y | INTEL CORPORATION. NR Positioning design enhancements. R1-2007946, 3GPP TSG RAN WG1 Meeting #103-e. 01 November 2020.<br>See section 2.2.1. | 5,10 |
| A | CATT. Discussion of NR positioning enhancements. R1-2007860, 3GPP TSG RAN WG1 Meeting #103-e. 01 November 2020.<br>See section 10. | 1-15 |
| A | OPPO. Discussions on NR positioning enhancements. R1-2008226, 3GPP TSG RAN WG1 Meeting #103-e. 01 November 2020.<br>See section 3.1. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 May 2022** | **04 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/000930**

| Patent document cited in search report | | | Publication date (day/month/year) | Patent family member(s) | | | Publication date (day/month/year) |
|---|---|---|---|---|---|---|---|
| CN | 110535607 | B | 07 August 2020 | BR | 112019019330 | A2 | 14 April 2020 |
| | | | | CN | 110168997 | A | 23 August 2019 |
| | | | | CN | 110168997 | B | 12 February 2021 |
| | | | | CN | 110535607 | A | 03 December 2019 |
| | | | | CN | 112968759 | A | 15 June 2021 |
| | | | | EP | 3586449 | A1 | 01 January 2020 |
| | | | | EP | 3586449 | B1 | 05 May 2021 |
| | | | | EP | 3883202 | A1 | 22 September 2021 |
| | | | | KR | 10-2019-0117732 | A | 16 October 2019 |
| | | | | KR | 10-2301048 | B1 | 13 September 2021 |
| | | | | PT | 3586449 | T | 22 June 2021 |
| | | | | US | 10574495 | B2 | 25 February 2020 |
| | | | | US | 10680866 | B2 | 09 June 2020 |
| | | | | US | 10938611 | B2 | 02 March 2021 |
| | | | | US | 2018-0278450 | A1 | 27 September 2018 |
| | | | | US | 2020-0195478 | A1 | 18 June 2020 |
| | | | | US | 2021-0184908 | A1 | 17 June 2021 |
| | | | | WO | 2018-171787 | A1 | 27 September 2018 |

Form PCT/ISA/210 (patent family annex) (July 2019)